# EUROPEAN PATENT SPECIFICATION

(11) **EP 2 704 283 B1**
(45) Date of publication and mention of the grant of the patent: **24.01.2018**
(21) Application number: 11864434.3
(22) Date of filing: 26.04.2011
(51) Int. Cl.: H02J 3/14, H02J 3/00

(54) **POWER MANAGEMENT SYSTEM AND METHOD**
LEISTUNGSVERWALTUNGSSYTEM UND -VERFAHREN
SYSTÈME ET PROCÉDÉ DE GESTION DE PUISSANCE

(43) Date of publication of application: 05.03.2014
(73) Proprietor: Hitachi, Ltd., Tokyo 100-8280 (JP)
(72) Inventor: KAWADA, Yohei, Tokyo 100-8280 (JP); YANO, Kojin, Tokyo 100-8280 (JP); NISHIYAMA, Takayoshi, Tokyo 100-8280 (JP)
(74) Representative: MERH-IP Matias Erny Reichl Hoffmann Patentanwälte PartG mbB
(86) International application number: PCT/JP2011/060120
(87) International publication number: WO 2012/147155

(56) References cited:
- EP-A2- 1 367 689
- WO-A1-2008/118396
- WO-A1-2010/093345
- JP-A- 2004 015 882
- JP-A- 2006 204 081
- JP-A- 2007 151 371
- JP-A- 2011 078 168
- SALMAN MOHAGHEGHI ET AL: "Demand Response Architecture: Integration into the Distribution Management System", SMART GRID COMMUNICATIONS (SMARTGRIDCOMM), 2010 FIRST IEEE INTERNATIONAL CONFERENCE ON, IEEE, PISCATAWAY, NJ, USA, 4 October 2010 (2010-10-04), pages 501-506, XP031790278, ISBN: 978-1-4244-6510-1
- ALEC BROOKS ET AL: "Demand Dispatch", IEEE POWER AND ENERGY MAGAZINE, IEEE., PISCATAWAY, NJ, US, vol. 8, no. 3, 31 May 2010 (2010-05-31), pages 20-29, XP011307869, ISSN: 1540-7977

## Description

### [Technical Field]

The present invention relates to a power management apparatus, a power management system, a power management method, and a power management program. A generic power management system according to the preamble of claim 1 is, for instance, known from EP 1 367 689 A1.

### [Background Art]

Electrical equipment and paths for supplying a commercial power source from a power supplier such as an electric power company to customers (residential houses, buildings, factories, and the like) are collectively referred to as a power distribution grid. With the exception of some major customers, each customer has heretofore used only the commercial power source from the power distribution grid. Nonetheless, taking an action toward a so-called low-carbon society has been an urgent issue in recent years, and there is a demand for diffusion of power sources with low impacts on the natural environment, such as solar power generation, wind power generation, heat pumps, and fuel cells. Such a new power source is installed individually by each customer, and is therefore referred to as a distributed power source in contrast to a large-scale power plant. Having a relatively small power generation capacity, a conventional distributed power source has often been used as an auxiliary power source during peak hours of power consumption, for example.

For example, as a technique related to the foregoing, there is disclosed a power demand peak-shift method (see PTL 1) for a peak-shift management server coupled to: a peak-shift usage server for managing power supply to electric apparatuses, each of which can be supplied with power from its charging device, through a transmission link; and to a storage apparatus for storing a reception DB and a power demand forecast DB that indicates a forecasted power demand in timetable. Here, the power demand peak-shift method is characterized by comprising: receiving from the peak-shift usage server multiple pieces of peak-shift offer information, each piece containing peak-shift power information on power consumption by an electric apparatus and peak-shift allowable time information on time allowable for power supply from the charging device in each electric apparatus; storing the received pieces of peak-shift offer information in the reception DB; creating an offer information list from the pieces of peak-shift offer information stored in the reception DB; extracting each piece of the peak-shift offer information containing the peak-shift power information and the peak-shift allowable time information on the corresponding electric apparatus from the offer information list; extracting time when the forecasted power demand becomes largest from the power demand forecast DB; calculating start time and end time of power supply to the electric apparatus from the charging device on the basis of the extracted time; calculating a new forecasted power demand by subtracting an amount of peak-shift power, which is derived from the peak-shift power information and the peak-shift allowable time information, from the original forecasted power demand; storing the new forecasted power demand in timetable in the power demand forecast DB in replacement of the original forecasted power demand; calculating start time and end time of power supply to a different electric apparatus from the charging device on the basis of the piece of the peak-shift offer information on the different electric apparatus acquired from the offer information list and on the new forecasted power demand; and transmitting the calculated start time and end time of power supply to each of the electric apparatuses to the peak-shift usage server. The possibility to take the margin of energy system into account is described in SALMAN MOHAGHEGHI ET AL: "Demand Response Architecture: Integration into the Distribution Management System", SMART GRID COMMUNICATIONS (SMARTGRIDCOMM), 2010 FIRST IEEE INTERNATIONAL CONFERENCE ON, IEEE, PISCATAWAY, NJ, USA, 4 October 2010, pages 501-506.

### [Citation List]

### [Patent Literature]

[PTL 1] Japanese Patent Application Laid-open Publication No. 2007-336796

EP 1 367 689 A2 describes an areal power information center that collects, via the communications line, the system information on the power flow and the voltage in the areal power transmission/distribution system. Also, the center collects the customer information on the consumed-power amounts by the respective customers, and on the generated-electricity amounts by the customers. Moreover, the center collects the wheeling information on a wheeling request for requesting a power transmission from one customer to another customer. Furthermore, based on the respective information collected, the center controls the reactive power from the areal-power-transmission/distribution-system voltage regulator, and the output-power from the electric generators.

WO 2010/093345 A1 describes a system and method that analyzes an aspect of the power grid for demand response in order to reduce feeder circuit losses . The system and method use a demand response model to select factors for the demand response. The demand response model includes a grid structure component and a dynamic operation component.

### [Summary of Invention]

### [Technical Problems]

Previously, a diffusion rate of distributed power sources was low and an amount of power generated by each distributed power source was relatively small. In recent years, however, the diffusion rate of distributed power sources has been increasing and an amount of power generated by each distributed power source has also been increasing. As a consequence, in the daytime when solar power generation becomes active, for instance, there may be a case where surplus power is generated because the power generated by customers exceeds the power consumed by the customers. Such a situation presumably takes place in a residential area in the daytime where many houses have low power consumption because some of the family members go out. A solar power generation apparatus placed on the roof of each house in such a residential area generates power irrespective of the presence or absence of residents. The surplus power is generated when the amount of power generated by the solar power generation apparatus exceeds the amount of power consumed by the household.

The surplus power can also be sold to a power supplier. Nevertheless, a distributed power source utilizing natural energy generally involves a large fluctuation in the amount of power generation. Accordingly, in order for a power grid to receive power from a distributed power source, it is necessary to improve or reinforce a transformation installation, a power distribution network, and the like. If an amount of power fed from each distributed power source into the power grid exceeds an estimated amount or fluctuates significantly, quality of the power in the power source grid may deteriorate. Meanwhile, in the conventional technique, customers manage their respective distributed power sources. Hence, it is difficult to supply surplus power from a certain customer to another customer for consumption.

As described above, the conventional techniques cannot efficiently use power outputted from distributed power sources within a given area. In addition, selling of surplus power to a power grid is also limited to a range of an amount of power receivable by the existing installations. In other words, the surplus power in the area is often wasted and is not used efficiently.

In view of the above, an object of the present invention is to provide a technique for performing power supply-demand adjustment among power customers and apparatuses within a given area while taking into account power supplied from distributed power sources.

### [Solution to Problem]

To solve the aforementioned problem, the present invention provides a power management system having the features defined in claim 1. Moreover, it is provided a management method for controlling the inventive system.

The arithmetic unit executes a processing to receive second management information and third management information via the communication unit from a second power management apparatus provided to each power customer in a given area. Here, the second management information representing an amount of power demand and an amount of power generation by the customer at a given future time point, and the third management information represents an amount of power demand and an amount of power generation adjustable by the customer. The arithmetic unit also executes processing to receive configuration information via the communication unit from a third power management apparatus provided to a power distribution grid. Here, the configuration information includes pieces of information on power distribution apparatuses provided to the power distribution grid, each customer coupled to each of the power distribution apparatuses, consuming power and supplying generated power to the grid, and an allowable capacity of power for each of power distribution grid sections defined by the power distribution apparatuses.

Further, the arithmetic unit executes a processing to calculate a sum of amounts of power demand and a sum of amounts of power generation at the given future time point in the given area on the basis of the second management information from the second power management apparatuses, and to calculate any of an amount of power surplus and an amount of power shortage in the given area using a difference between the sum of amounts of power demand and the sum of amounts of power generation.

The arithmetic unit also executes a processing to create first management information based on the configuration information and any of the amount of power demand and the amount of power generation adjustable by the customers represented by the third management information. Here, the first management information includes a plan to reduce the amount of power surplus by increasing the amounts of power demand or reducing the amounts of power generation by the customers within a range not exceeding the allowable capacity of power for each power distribution grid section.

The arithmetic unit also executes a processing to transmit the first management information at least to the second management apparatus of each customer designated by the first management information.

Meanwhile, a power management method of the present invention is implemented by an information processing apparatus which includes an arithmetic unit and a communication unit to communicate with an other apparatus. Here, the method causes the information apparatus to execute the following processing.

Specifically, the information processing apparatus executes a processing to receive second management information and third management information via the communication unit from a second power management apparatus provided to each power customer in a given area. Here, the second management information represents an amount of power demand and an amount of power generation by the customer at a given future time point, and the third management information represents an amount of power demand and an amount of power generation adjustable by the customer.

The information processing apparatus also executes a processing to receive configuration information via the communication unit from a third power management apparatus provided to a power distribution grid. Here, the configuration information includes pieces of information on power distribution apparatuses provided to the power distribution grid, each customer coupled to each of the power distribution apparatus, consuming power and supplying generated power to the grid, and an allowable capacity of power for each of power distribution grid sections defined by the power distribution apparatuses.

The information processing apparatus also executes a processing to calculate a sum of amounts of power demand and a sum of amounts of power generation at the given future time point in the given area on the basis of the second management information from the second power management apparatuses, and to calculate any of an amount of power surplus and an amount of power shortage in the given area using a difference between the sum of amounts of power demand and the sum of amounts of power generation.

The information processing apparatus also executes a processing to create first management information based on the configuration information and the amounts of power demand or the amounts of power generation adjustable by the customers represented by the third management information. Here, the first management information includes a plan to reduce the amount of power surplus by increasing in the amount of power demand or reducing the amount of power generation by the each customer within a range not exceeding the allowable capacity of power for each power distribution grid section.

The information processing apparatus also executes a processing to transmit the first management information at least to the second management apparatus of each customer designated by the first management information.

Meanwhile, a power management program is implemented by an information processing apparatus, which is provided with an arithmetic unit and a communication unit to communicate with an other apparatus, and configured to perform power management. Here, the program causes the information apparatus to execute the following processing. Specifically, the program causes the information processing apparatus to execute a processing to receive second management information and third management information via the communication unit from a second power management apparatus provided to each power customer in a given area. Here, the second management information represents an amount of power demand and an amount of power generation by the customer at a given future time point, and the third management information represents an amount of power demand and an amount of power generation adjustable by the customer.

The program also causes the information processing apparatus to execute a processing to receive configuration information via the communication unit from a third power management apparatus provided to a power distribution grid. Here, the configuration information includes pieces of information on power distribution apparatuses provided to the power distribution grid, each customer coupled to each of the power distribution apparatus, consuming power and supplying generated power to the grid, and an allowable capacity of power for each of power distribution grid sections defined by the power distribution apparatuses.

The program also causes the information processing apparatus to execute a processing to calculate a sum of amounts of power demand and a sum of amounts of power generation at the given future time point in the given area on the basis of the second management information from the second power management apparatuses, and to calculate any of an amount of power surplus and an amount of power shortage in the given area using a difference between the sum of amounts of power demand and the sum of amounts of power generation.

The program also causes the information processing apparatus to execute a processing to create first management information based on the configuration information and the amounts of power demand or the amounts of power generation adjustable by the customers represented by the third management information. Here, the first management information includes a plan to reduce the amount of power surplus by increasing the amounts of power demand or reducing the amounts of power generation by the customers within a range not exceeding the allowable capacity of power for each power distribution grid section.

The program also causes the information processing apparatus to execute a processing to transmit the first management information at least to the second management apparatus of each customer designated by the first management information.

Meanwhile, a power management system of the present invention is a computer system which includes: a first power management apparatus configured to perform power management by processing a variety of information on each power customer and a power distribution grid; a second power management apparatus provided to each power customer; and a third power management apparatus provided to the power distribution grid. Here, the first power management apparatus, the second power management apparatus, and the third power management apparatus being communicatively coupled to one another

In this case, the second power management apparatus includes a communication unit which communicates with the other apparatuses, and an arithmetic unit which executes processing: to monitor an amount of power demand and an amount of power generation by the each customer; to create second management information representing an amount of power demand and an amount of power generation by the each customer at a given future time point on basis of values of the amount of power demand and the amount of power generation obtained by monitoring; to create third management information representing an amount of power demand and an amount of power generation adjustable by the each customer from the amount of power demand and the amount of power generation in the second management information; and to transmit the created second and third information to the first power management apparatus.

Meanwhile, the third power management apparatus includes a communication unit which communicates with the other apparatuses, and an arithmetic unit which executes processing to transmit configuration information to the first power management apparatus from the third power management apparatus provided to the power distribution grid. Here, the configuration information including pieces of information on power distribution apparatuses provided to the power distribution grid, each customer coupled to the power distribution apparatus, consuming power and supplying generated power to the grid, and an allowable capacity of power for each of power distribution grid sections defined by the power distribution apparatuses.

Meanwhile, the first power management apparatus includes a communication unit which communicates with the other apparatuses, and an arithmetic unit which executes: a processing to receive the second management information and the third management information from the second power management apparatuses via the communication unit; a processing to receive the configuration information from the third power management apparatus via the communication unit; a processing to calculate a sum of amounts of power demand and a sum of amounts of power generation at the given future time point in the given area on the basis of the second management information from the second power management apparatuses, and to calculate any of an amount of power surplus and an amount of power shortage in the given area using a difference between the sum of amounts of power demand and the sum of amounts of power generation; and a processing to create first management information based on the configuration information and the amounts of power demand or the amounts of power generation adjustable by the customers represented by the third management information. Here, the first management information including a plan to reduce the amount of power surplus by increasing the amounts of power demand or reducing the amounts of power generation by the customers within a range not exceeding the allowable capacity of power for each power distribution grid section. Further, the arithmetic unit executes a processing to transmit the first management information at least to the second management apparatus of each customer designated by the first management information.

Meanwhile, a power management method implemented by a computer system which includes: a first power management apparatus configured to perform power management by processing a variety of information on each power customer and a power distribution grid; a second power management apparatus provided to each power customer; and a third power management apparatus provided to the power distribution grid. Here, the first power management apparatus, the second power management apparatus, and the third power management apparatus being communicatively coupled to one another. The computer system executes the following processing.

Specifically, the second power management apparatus, which includes an arithmetic unit and a communication unit to communicate with an other apparatus, executes processing: to monitor an amount of power demand and an amount of power generation by each customer; to create second management information representing an amount of power demand and an amount of power generation by the each customer at a given future time point on basis of values of the amount of power demand and the amount of power generation obtained by monitoring; to create third management information representing an amount of power demand and an amount of power generation adjustable by the each customer from the amount of power demand and the amount of power generation in the second management information; and to transmit the created information to the first power management apparatus.

Meanwhile, the third power management apparatus, which includes an arithmetic unit and a communication unit to communicate with an other apparatus, executes processing to transmit configuration information to the first power management apparatus from the third power management apparatus provided to the power distribution grid. Here, the configuration information includes pieces of information on power distribution apparatuses provided to the power distribution grid, each customer coupled to the power distribution apparatus, consuming power and supplying generated power to the grid, and an allowable capacity of power for each of power distribution grid sections defined by the power distribution apparatuses.

Meanwhile, the first power management apparatus, which includes an arithmetic unit and a communication unit to communicate with the rest of the apparatuses, executes: a processing to receive the second management information and the third management information from the second power management apparatus via the communication unit; a processing to receive the configuration information from the third power management apparatus via the communication unit; a processing to calculate a sum of amounts of power demand and a sum of amounts of power generation at the given future time point in the given area on the basis of the second management information from each second power management apparatus, and to calculate any of an amount of power surplus and an amount of power shortage in the given area using a difference between the sum of amounts of power demand and the sum of amounts of power generation; and a processing to create first management information based on the configuration information and the amounts of power demand or the amounts of power generation adjustable by the customers represented by the third management information. Here, the first management information includes a plan to reduce the amount of power surplus by increasing the amounts of power demand or reducing the amounts of power generation by the customers within a range not exceeding the allowable capacity of power for each power distribution grid section. Further, the first power management apparatus executes a processing to transmit the first management information at least to the second management apparatus of the each customer designated by the first management information. the first power management apparatus, which includes an arithmetic unit and a communication unit to communicate with the rest of the apparatuses, executes: processing to receive the second management information and the third management information from the second power management apparatuses via the communication unit; processing to receive the configuration information from the third power management apparatus via the communication unit; and processing to calculate a sum of amounts of power demand and a sum of amounts of power generation at the given future point in the given area on the basis of the second management information from the second power management apparatuses, and to calculate any of an amount of power surplus and an amount of power shortage in the given area using a difference between the sum of amounts of power demand and the sum of amounts of power generation; processing to create first management information based on the configuration information and the amounts of power demand or the amounts of power generation adjustable by the customers represented by the third management information. Here, the first management information including a plan to reduce the amount of power surplus by increasing the amounts of power demand or reducing the amounts of power generation by the customers within a range not exceeding the allowable capacity of power for each power distribution grid section. Further, the first power management apparatus executes processing to transmit the first management information at least to the second management apparatus of the each customer designated by the first management information.

Other problems and solutions thereto disclosed in this application will become apparent from the section titled Description of Embodiments and the accompanying drawings.

### [Advantageous Effects of Invention]

According to the present invention, it is possible to provide a technique for performing power supply-demand adjustment among power customers and installations within a given area while taking into account power to be supplied from distributed power sources.

### [Brief Description of Drawings]

[Fig. 1]

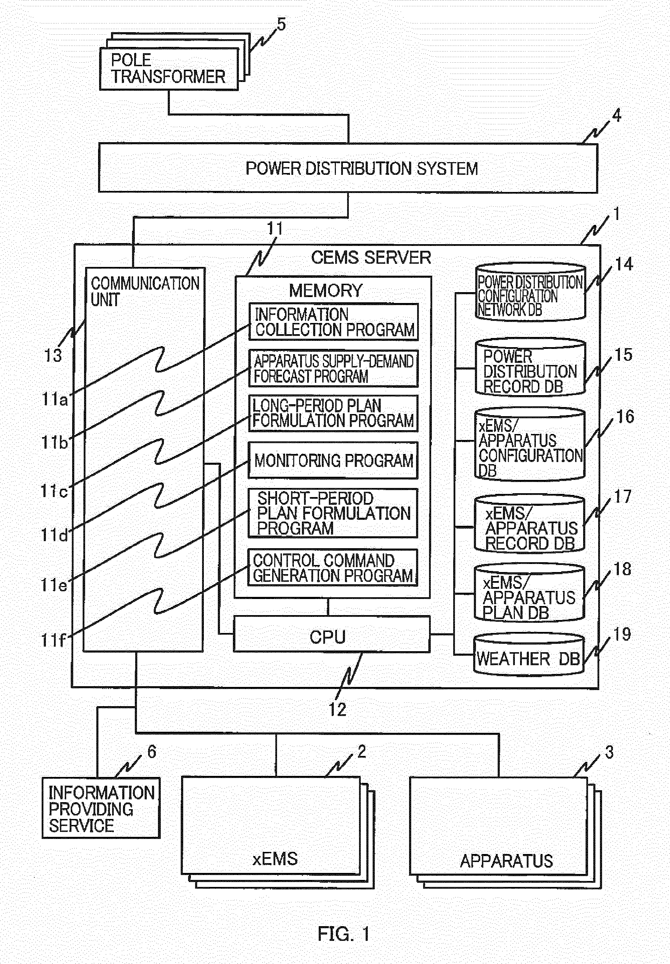

   Fig. 1 is a view showing a configuration example of a power management system including a CEMS server (a first power management apparatus) related to an embodiment of the present invention.
[Fig. 2]

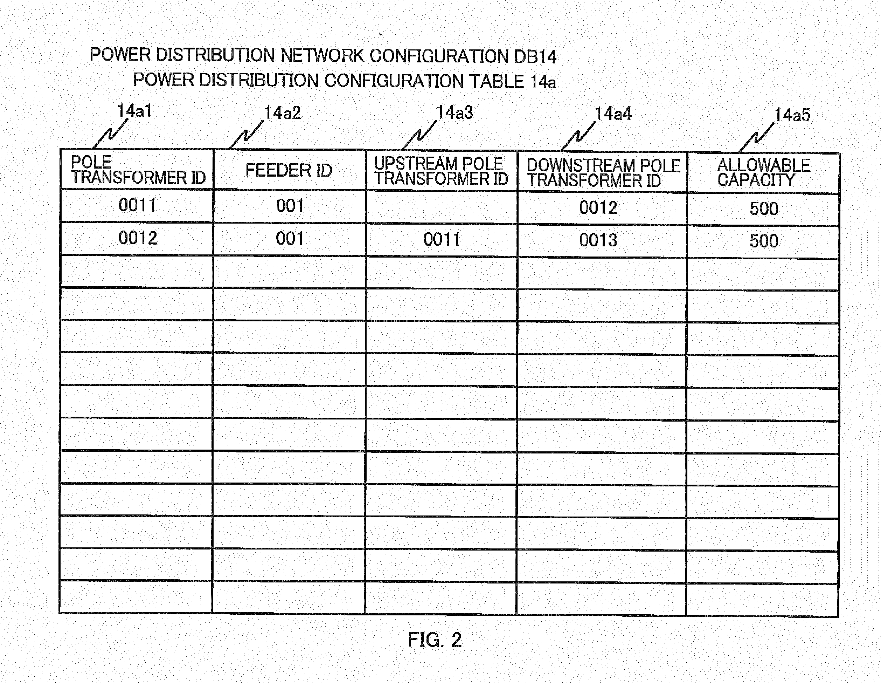

   Fig. 2 is a view showing an example of a table held by a power distribution network configuration DB in the embodiment of the present invention.
[Fig. 3]

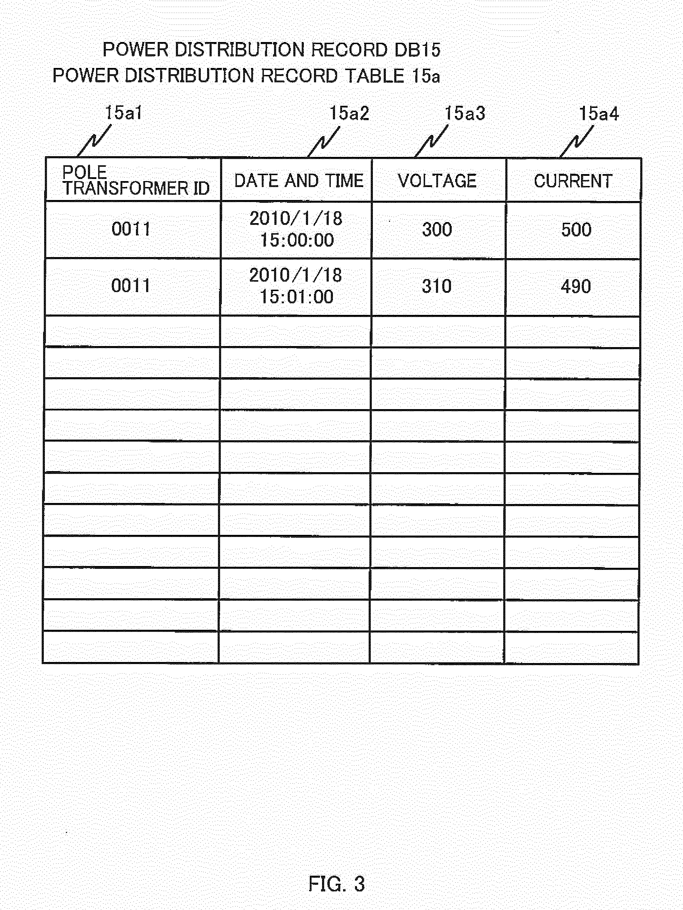

   Fig. 3 is a view showing an example of a table held by a power distribution record DB in the embodiment of the present invention.
[Fig. 4]

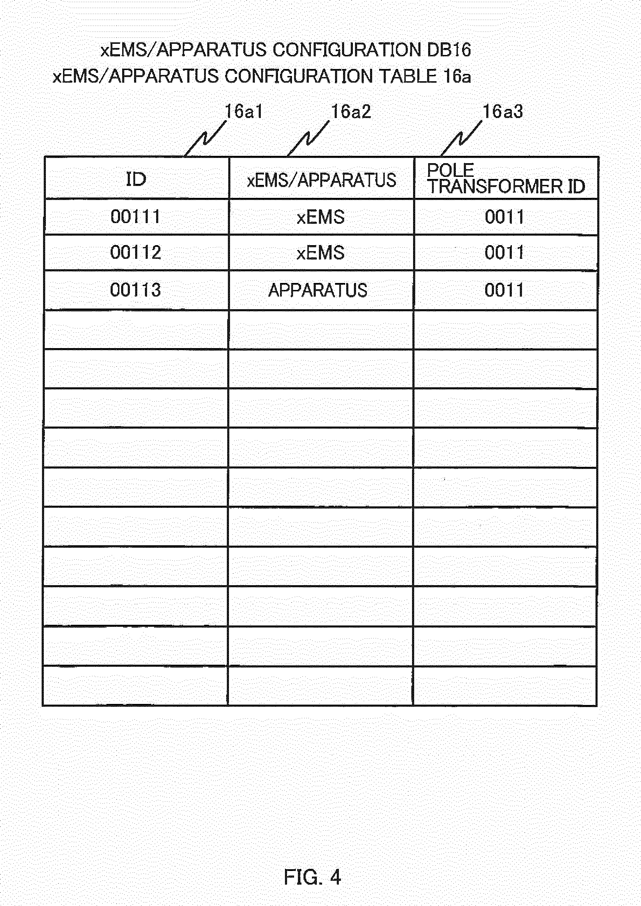

   Fig. 4 is a view showing an example of a table held by an xEMS/apparatus configuration DB in the embodiment of the present invention.
[Fig. 5]

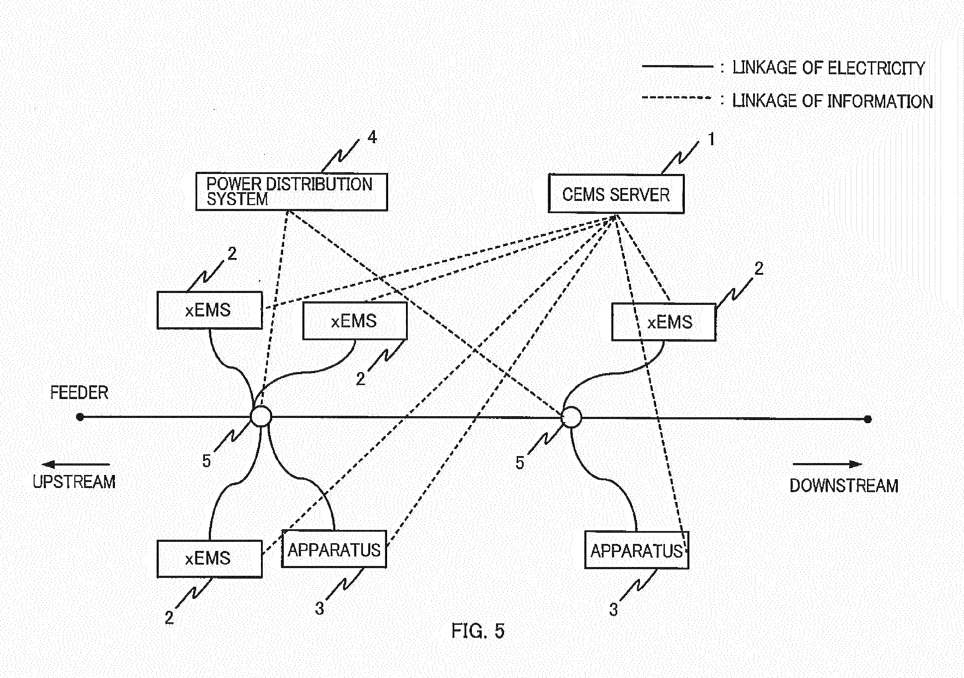

   Fig. 5 is a schematic diagram showing a relation between power distribution configuration information and xEMS/apparatus configuration information in the embodiment of the present invention.
[Fig. 6]

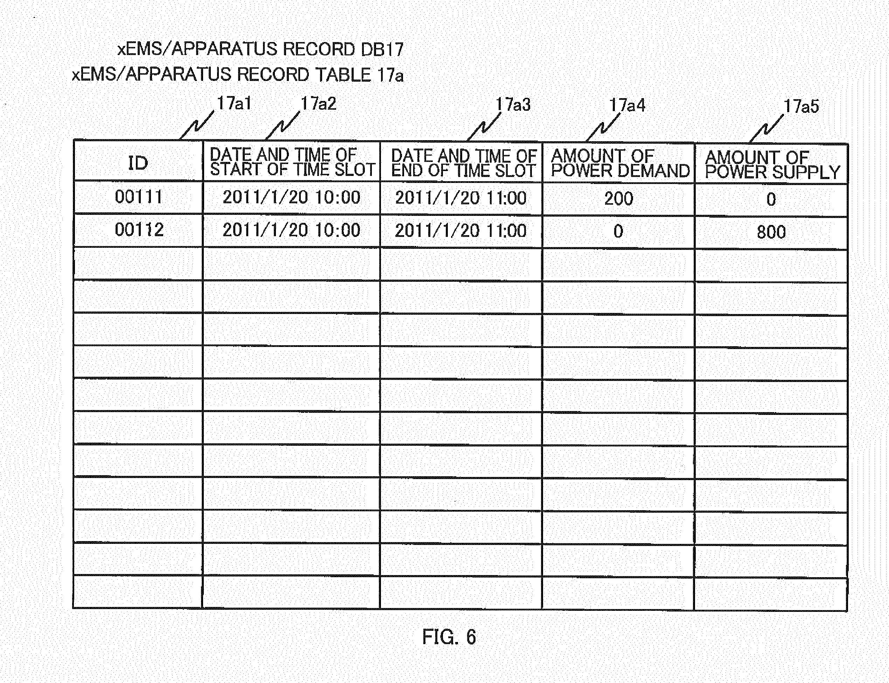

   Fig. 6 is a view showing an example of a table held by an xEMS/apparatus record DB in the embodiment of the present invention.
[Fig. 7A]

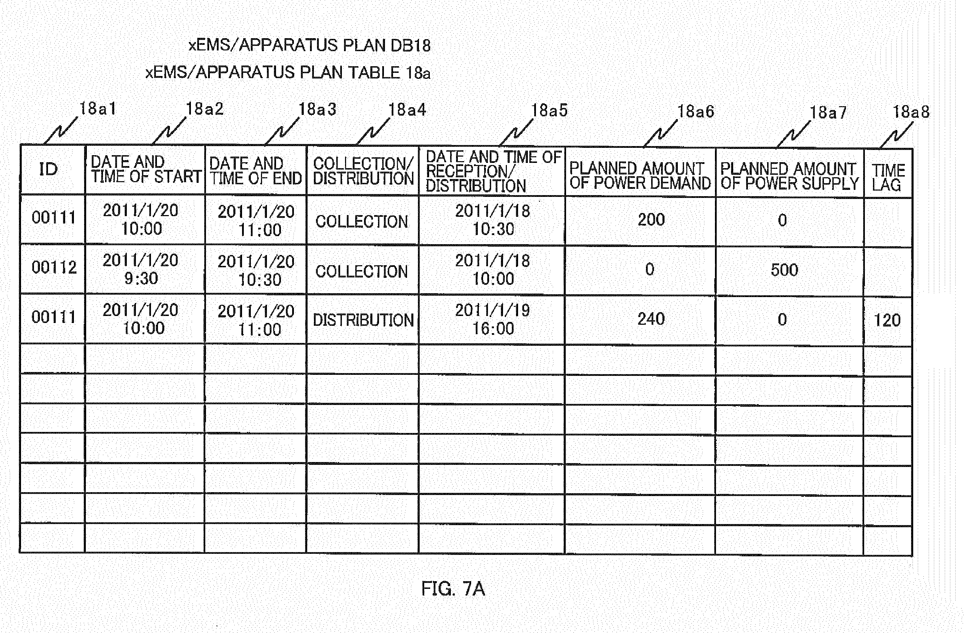

   Fig. 7A is a view showing a first example of a table held by an xEMS/apparatus plan DB in the embodiment of the present invention.
[Fig. 7B]

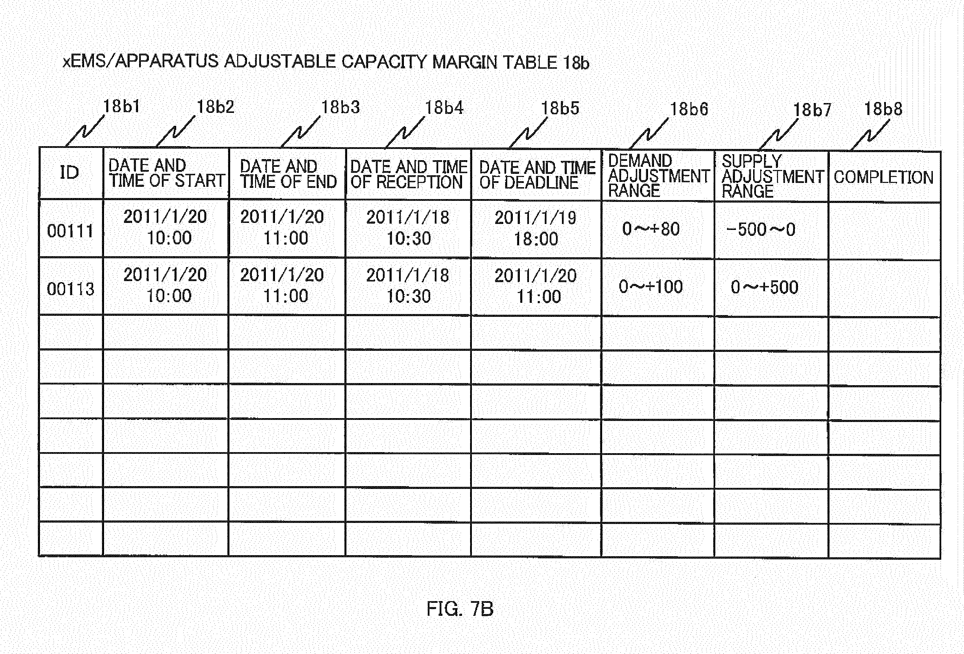

   Fig. 7B is a view showing a second example of a table held by the xEMS/apparatus plan DB in the embodiment of the present invention.
[Fig. 8A]

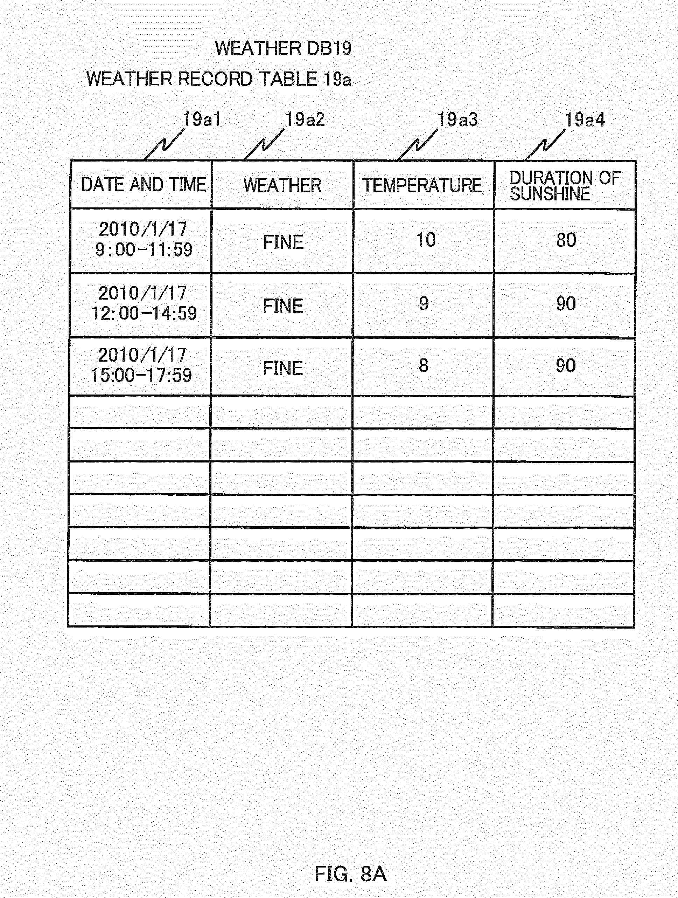

   Fig. 8A is a view showing a first example of a table held by a weather DB in the embodiment of the present invention.
[Fig. 8B]

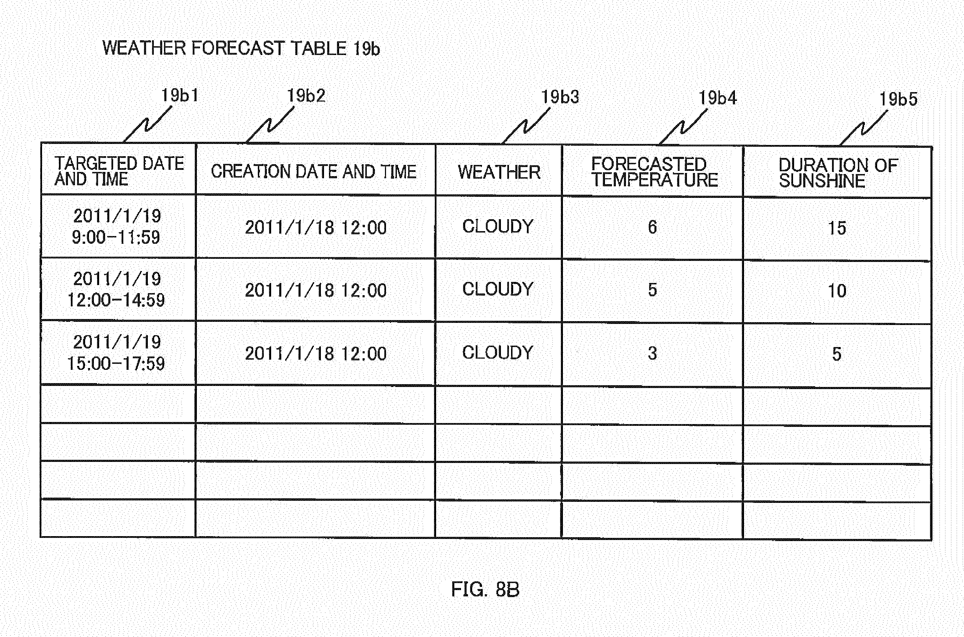

   Fig. 8B is a view showing a second example of a table held by the weather DB in the embodiment of the present invention.
[Fig. 9]

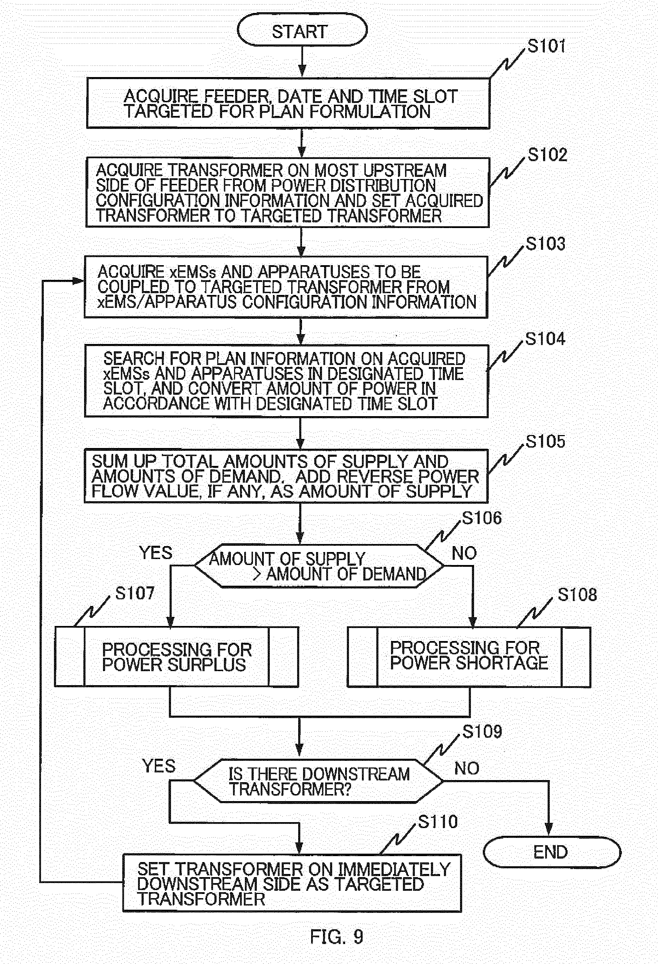

   Fig. 9 is a flowchart showing a first example of procedures of a power management method in the embodiment of the present invention.
[Fig. 10]

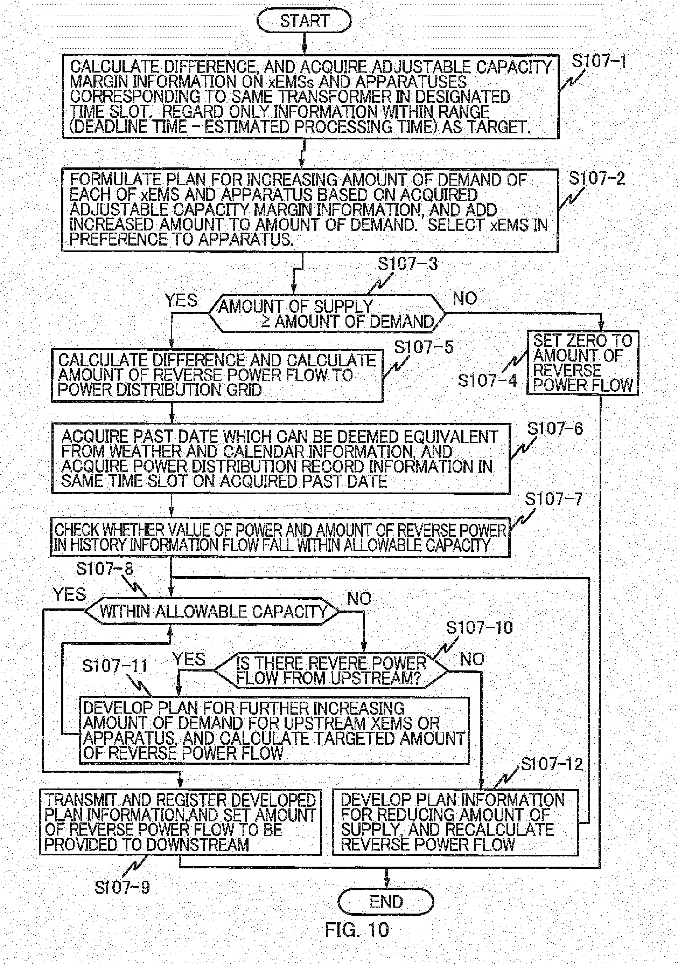

   Fig. 10 is a flowchart showing a second example of the procedures of the power management method in the embodiment of the present invention.
[Fig. 11]

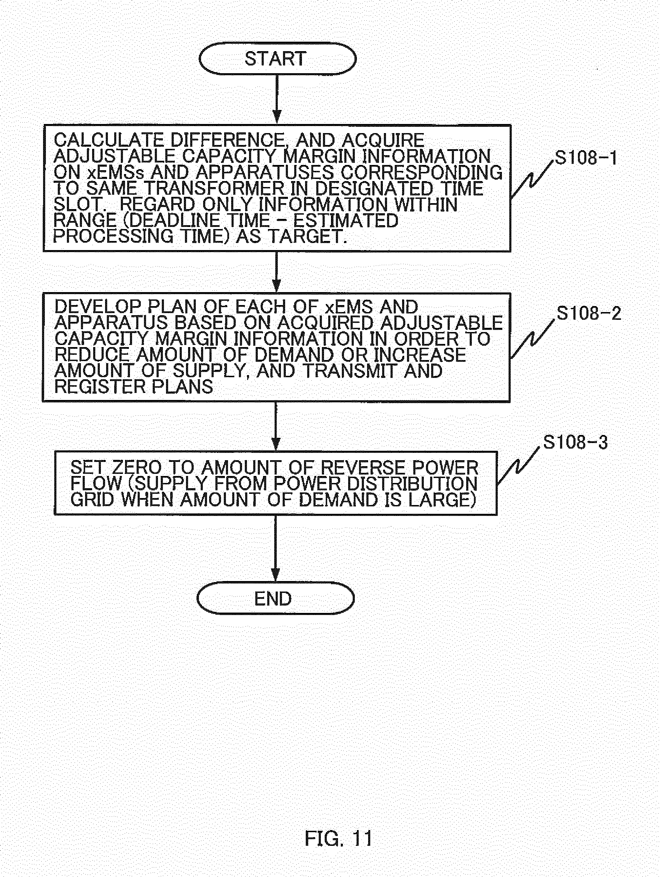

   Fig. 11 is a flowchart showing a third example of the procedures of the power management method in the embodiment of the present invention.
[Fig. 12]

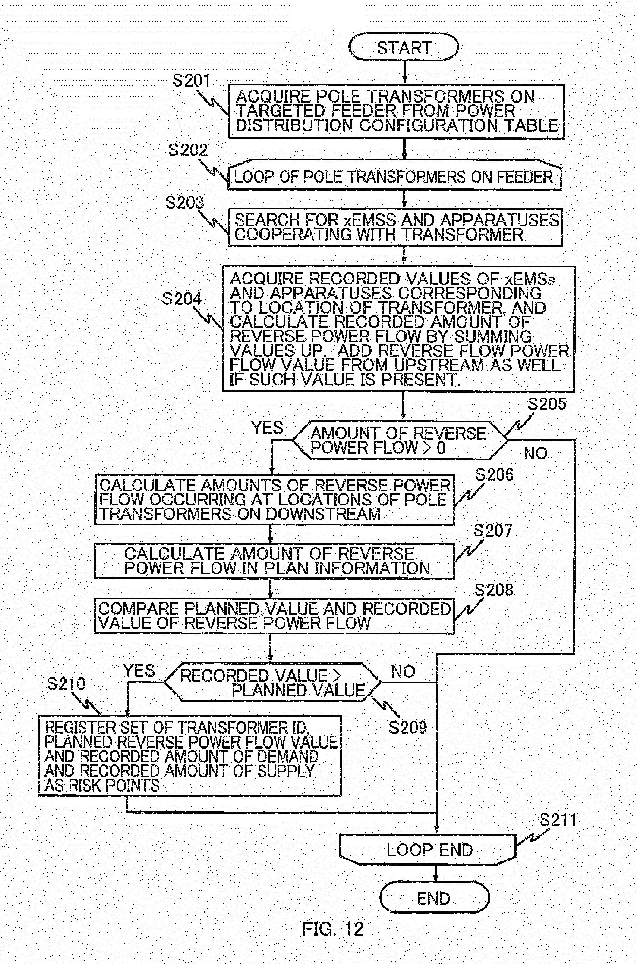

   Fig. 12 is a flowchart showing a fourth example of the procedures of the power management method in the embodiment of the present invention.
[Fig. 13]

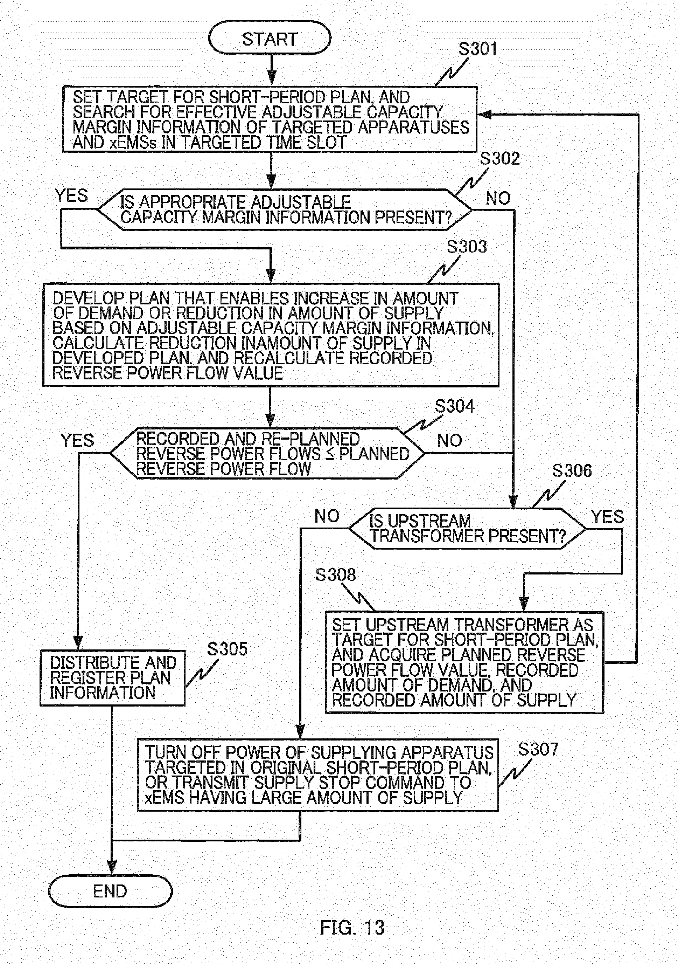

   Fig. 13 is a flowchart showing a fifth example of the procedures of the power management method in the embodiment of the present invention.

### [Description of Embodiments]

### ---System Configuration---

An embodiment of the present invention will be described below in detail by using the drawings. Fig. 1 is a view showing a configuration example of a power management system 100 including a CEMS server 1 (a first power management apparatus) related to an embodiment of the present invention. The power management system 100 is a computer system configured to perform power supply-demand adjustment among power customers and installations within a given area while taking into account power to be supplied from distributed power sources. In this embodiment, there is shown a block diagram in the case of applying the CEMS server 1, which is the first power management apparatus in the power management system 100, to the power supply-demand management in a specific area.

The CEMS server 1 in Fig. 1 is a server configured to perform power supply-demand adjustment in a specific area. The CEMS stands for a community energy management system. The CEMS is a system configured to define an "area" in accordance with an administrative area of a local government, a configuration of a power distribution network, and the like and to perform the power supply-demand adjustment involving distributed power sources and commercial grid power sources within the area. The CEMS server 1 is coupled, through a network, to other EMSs each of which is a second power management apparatus configured to perform power supply-demand adjustment within a territory of each customer (these EMSs will be collectively referred to as xEMSs 2; note that the xEMSs do not include the CEMS), and to apparatuses 3 including storage batteries and distributed power sources such as solar power generation apparatuses. Each of the apparatuses 3 is an apparatus that can be directly controlled by the CEMS server 1.

The xEMSs 2 include: a HEMS (home energy management system) configured to perform power supply-demand adjustment within a home; a BEMS (building energy management system) configured to perform power supply-demand adjustment within a building; a FEMS (factory energy management system) configured to perform power supply-demand adjustment within a factory; and so forth.

As will be described later, the CEMS server 1 is formed as a computer at least including a memory 11 as a storage device used when arithmetic processing is executed, and an arithmetic processing device (an arithmetic unit) configured to perform the arithmetic processing. Here, the memory 11 is formed from a RAM (random access memory) or the like. The arithmetic processing is achieved by execution of programs on the memory 11 by the arithmetic processing device formed from a CPU (central processing unit) 12. In addition, the computer includes a network interface for communication, namely, a communication unit 13.

Similarly to the CEMS server 1, each xEMS 2 being the second power management apparatus is also formed as a computer having a CPU, a memory, and a network interface. In addition, the xEMS 2 collects information concerning an amount of power supply (an amount of power generation) and an amount of power usage (an amount of power demand) by an apparatus that operates as well as uses the power within a targeted range (within the house, the building, the factory, or the like) of the xEMS 2 in real time. Moreover, the xEMS 2 sums up the amounts of power supply and the amounts of power usage collected as described above, and thus transmits information on records of a total amount of power usage and a total amount of power supply within a target of management by the xEMS 2, namely, the house, the building, the factory, or the like to the CEMS server 1 in real time.

In the meantime, each xEMS 2 develops plans for the amount of power supply and the amount of power usage in the future by forecasting the amount of power supply and the amount of power usage by the apparatus under monitoring, an amount of charge in a storage battery, an amount and temperature of hot water in a water heater, and the like. Then, the xEMS 2 transmits the plans to the CEMS server 1. Furthermore, the xEMS 2 calculates adjustable capacity margins (an amount of power usage which can be further increased or reduced from the planned amount, and an amount of power supply which can be further increased or reduced from the planned amount) from: the forecasted amount of power supply and the forecasted amount of power usage; a maximum output value and maximum power consumption by each apparatus within the targeted range; the forecasted amount of charge in the storage battery; the forecasted amount and temperature of hot water in the water heater; and the like. Then, the xEMS 2 transmits the calculated values to the CEMS server 1.

On the other hand, information on plans developed by the CEMS server 1 for the xEMS 2 is transmitted from the CEMS server 1 to the xEMS 2. Details of the information on the records, the plans, and the adjustable capacity margins will be described later.

Each apparatus 3 is the apparatus that can be directly controlled by the CEMS server 1. Here, the apparatus 3 is typically assumed to be a distributed power source such as a power conditioner for solar power generation or a storage battery. Data on supply (discharge) of power, power consumption, and an amount of charge in the storage battery at a certain point, for example, are transmitted from the apparatus 3 to the CEMS server 1 in real time. On the other hand, a control command such as "start charging at y o' clock" is transmitted from the CEMS server 1 to the apparatus 3. Note that the xEMS 2 may mediate the transmission of the data from the apparatus 3 to the CEMS server 1 and the transmission of control instructions from the CEMS server 1 to the apparatus 3. Here, a network among the xEMSs 2, the apparatuses 3, and the CEMS server 1 is assumed to include dedicated lines and public lines such as the Internet.

The CEMS server 1 is also coupled through a dedicated line to a power distribution system 4, which is a third power management apparatus configured to monitor and control a commercial power distribution network. The power distribution system 4 is coupled through dedicated lines to power distribution apparatuses such as pole transformers 5 that are deployed on the power distribution network. In the meantime, the power distribution system 4 is an information processing apparatus, which holds configuration information on the power distribution apparatuses and the like in a given storage means. The power distribution system 4 is the system for stably distributing the power to customers by measuring and monitoring voltage values and current values at the power distribution apparatuses, and performing control such as turning switches on and off if any of measured values comes close to an abnormal value.

An information providing service 6 is also coupled to the CEMS server 1 through the network. The information providing service 6 is an information processing apparatus configured to provide the CEMS server 1 with information concerning weather records and forecasts. A weather record means weather and meteorological history information and a weather forecast means forecasted information on the weather and the meteorology in the future. Details of the information will be described later.

Next, details of the CEMS server 1 will be described using Fig. 1. The communication unit 13 of the CEMS server 1 receives the information on the records, the plans, and the adjustable capacity margins of the power transmitted from each xEMS 2 to the CEMS server 1. In addition, the communication unit 13 receives the information on the records of the power transmitted from each apparatus 3 to the CEMS server 1. Similarly, the communication unit 13 transmits the information concerning the plan developed by the CEMS server 1 to the xEMS 2, and transmits the control command generated by the CEMS server 1 to the apparatus 3. Meanwhile, the communication unit 13 sends the power distribution system 4 a request for information on the configuration of the power distribution network held by the power distribution system 4, and receives information transmitted from the power distribution system 4 as a response. Details of the information on the configuration of the power distribution network will be described later. Furthermore, the communication unit 13 regularly sends the information providing service 6 a request for the information concerning the weather records and forecasts, and receives information transmitted from the information providing serve 6 as a response. In this way, the information to be transmitted from the communication unit 13 is delivered from the CPU 12, while the information received by the communication unit 13 is delivered to the CPU 12.

The CPU 12 loads the information received from the communication unit 13 into the memory 11 and executes various programs on the memory 11, thereby processing the information and registering information with a database (hereinafter abbreviated as DB). Meanwhile, the CPU 12 executes various programs on the memory 11, searches for and acquires the information from the DB, loads the information into the memory 11 to process the information as needed, transmits the information to the communication unit 13, and so forth.

One of the programs to be executed by the CPU 12 is an information collection program 11a, which is designed to create the request to the power distribution system 4 or the information providing service 6 so as to collect the information therefrom, to collect the information transmitted from the xEMSs 2 and the apparatuses 3, and to register the information with corresponding DBs.

Another one of the programs is an apparatus supply-demand forecast program 11b, which is designed to develop a supply-demand plan for each apparatus 3 based on its amount of power usage and amount of power supply.

Still another one of the programs is a long-period plan formulation program 11c, which is designed to formulate plans for a long period, from a day after a certain point onward, for instance, on the basis of the plans received from the xEMSs 2 and the plans for the apparatuses 3 developed by the apparatus supply-demand forecast program 11b.

Still another one of the programs is a monitoring program 11d, which is designed to monitor the amounts of power usage and the amounts of power supply of the xEMSs 2 and the apparatuses 3 cooperating with one another on the basis of the information collected by the information collection program 11a, and to estimate an amount of power for causing a reverse power flow to a power distribution grid.

Still another one of the programs is a short-period plan formulation program 11e, which is designed to formulate plans for short periods of several seconds to several minutes after given points of time in accordance with the amount of the reverse power flow estimated by the monitoring program 11d.

Yet another one of the programs is a control command generation program 11f, which is designed to generate control commands on the basis of the plans for the apparatuses 3 developed by the CEMS server 1.

These programs are stored as files in a storage device such as a hard disk included in the CEMS server 1. In addition, these programs are loaded into the memory 11 as appropriate. Details of operations of the programs will be described later. The information which the CEMS server 1 stores as the DBs is as follows .

A power distribution network configuration DB 14 is a DB configured to hold the information on the pole transformers 5 that are the power distribution apparatuses. The power distribution network configuration DB 14 holds a power distribution configuration table 14a that holds relations between feeders in the power distribution grid and the pole transformers 5. Fig. 2 shows an example of the power distribution configuration table 14a. In the power distribution configuration table 14a, one record corresponds to one pole transformer 5. Each record holds: a pole transformer ID 14a1 to uniquely identify a pole transformer 5 regarded as a target; a feeder ID 14a2 to uniquely identify the feeder on which the targeted pole transformer is placed; an upstream pole transformer ID 14a3 to represent a pole transformer 5 located on an immediately upstream side (a power substation side) of the targeted pole transformer; a downstream pole transformer ID 14a4 to represent a pole transformer located on an immediately downstream side (a load side) of the targeted pole transformer; an allowable capacity 14a5 of the power flowing on the pole transformer 5; and the like.

In the case of the pole transformer 5 placed on the most upstream side, the upstream pole transformer ID 14a3 in the corresponding record is "null". On the other hand, in the case of the pole transformer 5 placed on the most downstream side, the downstream pole transformer ID 14a4 in the corresponding record is "null". This information will be hereinafter referred to as power distribution configuration information. The information collection program 11a compares a feeder and upstream and downstream positional information on pole transformers 5 placed on the feeder, which are acquired by transmitting a request to the power distribution system 4, with the contents of the power distribution configuration table 14a held in advance by the CEMS server 1. If there is a difference therebetween, then the corresponding contents are registered in, deleted from, or updated in the record.

In this embodiment, each pole transformer 5 is used as a unit of a section in order to define power distribution grid sections. Instead, the sections may be defined by using sections between other power distribution grid apparatuses such as switches. In this case, the power distribution configuration table 14a holds switch section ID instead of the pole transformer ID 14a1, and the switch section ID will be used in the subsequent processing.

Meanwhile, a power distribution record DB 15 is a DB configured to hold information concerning measured values of the pole transformers 5 which are the power distribution apparatuses. The power distribution record DB 15 retains a power distribution record table 15a that holds histories of voltage values of the power distribution apparatuses. Fig. 3 shows an example of the power distribution record table 15a. In the power distribution record table 15a, one record represents a measured value of one pole transformer 5 at a certain point in time. Each record holds: a pole transformer ID 15a1 to represent a pole transformer 5 as a target; date and time 15a2 measured; a voltage 15a3 to represent a measured voltage value; a current 15a4 to represent a measured current value: and the like. This information will be hereinafter referred to as power distribution record information. The CEMS server 1 performs batch transmission of requests to the power distribution at daily or hourly intervals, for example. Thus, the CEMS server 1 acquires history information on the voltage values of each pole transformer 5 and registers the information with the corresponding record.

In this embodiment, the voltage 15a3 and the current 15a4 are used as the power distribution record information. However, other collectable items including values representing a characteristic and a power capacity of the current flowing on the power distribution grid are held as well.

Meanwhile, an xEMS/apparatus configuration DB 16 is a DB configured to hold information on the xEMS 2 or the apparatus 3 which cooperates with the CEMS server 1. The xEMS/apparatus configuration DB 16 holds an xEMS/apparatus configuration table 16a representing which power distribution apparatus (the pole transformer 5 in this embodiment) the xEMS 2 or the apparatus 3 is coupled to.

Fig. 4 shows an example of the xEMS/apparatus configuration table 16a. In the xEMS/apparatus configuration table 16a, one record represents either one xEMS 2 or apparatus 3. Each record holds: an ID 16a1 to uniquely identify either an xEMS 2 or an apparatus 3 as a target; xEMS/apparatus 16a2 to represent whether the target is the xEMS 2 or the apparatus 3; a pole transformer ID 16a3 to represent a pole transformer 5 to which the targeted xEMS 2 or apparatus 3 is coupled; and the like. This information will be hereinafter referred to as xEMS/apparatus configuration information. When an xEMS 2 or an apparatus 3 to cooperate with the CEMS server 1 is newly added, the CEMS server 1 requests the pole transformer ID 16a3 to be newly coupled, for example, from the power distribution system 4 on the basis of a site to place the xEMS 2 or the apparatus 3, power sales contract information, and the like. The CEMS server 1 registers information, which is acquired as a response thereto, with the record.

Here, a relation between the power distribution configuration information and the xEMS/apparatus configuration information will be described using Fig. 5. The power distribution configuration information shows a configuration in which one or more pole transformers 5 are placed on one feeder, and xEMSs 2 and apparatuses 3 are coupled to the respective pole transformers 5. When each xEMS 2 or apparatus 3 receives supply of the power from the power distribution grid, the power passes through the corresponding pole transformer 5. Similarly, when each xEMS 2 or apparatus 3 causes a reverse flow of the power to the distribution grid, the power passes through the corresponding pole transformer 5.

An xEMS/apparatus record DB 17 is a DB configured to hold histories of amounts of power demand and amounts of power supply of the xEMSs 2 and the apparatuses 3. The xEMS/apparatus record DB 17 holds an xEMS/apparatus record table 17a. The xEMS/apparatus record table 17a holds data on an amount of power demand and an amount of power supply by each of the xEMSs 2 and the apparatuses 3. Here, the amount of power demand represents an amount of power supplied from the power distribution grid to and consumed by the xEMS 2 or the apparatus 3 during a period from a certain time to another certain time. The amount of power supply represents an amount of power supplied from the xEMS 2 or the apparatus 3 to the power distribution grid during a period from a certain time to another certain time.

Fig. 6 shows an example of the xEMS/apparatus record table 17a. In the xEMS/apparatus record table 17a, one record represents either the amount of power demand or the amount of power supply by one xEMS 2 or apparatus 3 in a certain time slot. Each record holds: an ID 17a1 of the targeted xEMS 2 or apparatus 3; date and time of start of a time slot 17a2 to represent date and time of start of a time slot of the record; date and time of end of the time slot 17a3 to represent date and time of an end of the time slot; an amount of power demand 17a4 to represent the amount of power supplied from the power distribution grid to and consumed by the targeted xEMS 2 or apparatus 3 during the time slot; an amount of power supply 17a5 to represent the amount of power supplied from the xEMS 2 or the apparatus 3 to the power distribution grid during the time slot; and the like. This information will be hereinafter referred to as xEMS/apparatus record information.

If an amount of power usage exceeds an amount of power generation in the xEMS 2 or the apparatus 3, a value greater than "0" is inputted to the amount of power demand 17a4 while "0" is inputted to the amount of power supply 17a5 in the record. On the other hand, if the amount of power generation exceeds the amount of power usage in the xEMS 2 or the apparatus 3, "0" is inputted to the amount of power demand 17a4 and a value greater than "0" is inputted to the amount of power supply 17a5 in the record. When a balance between the demand and supply of power is maintained in the xEMS 2 or the apparatus 3, "0" is inputted to both of the amount of power demand 17a4 and the amount of power supply 17a5 in the record.

The xEMS 2 creates the xEMS/apparatus record information by summing up amounts of power usage or amounts of power supply of apparatuses and the like in the xEMS 2, and transmits the information to the CEMS server 1. The information collection program 11a of the CEMS server 1 receives the xEMS/apparatus record information and registers the information with the record. Meanwhile, the apparatus 3 periodically transmits a value of the power usage or the power supply at each point in time to the CEMS server 1. In this case, the information collection program 11a of the CEMS server 1 calculates the amount of power demand 17a4 or the amount of power supply 17a5 during a predetermined time width on the basis of the value of the power received and collected from the apparatus 3, and then registers the amount 17a4 or 17a5 with the record.

Meanwhile, an xEMS/apparatus plan DB 18 is a DB configured to hold information on plans of an amount of power demand to be used by the xEMS 2 or the apparatus 3 and an amount of power supply to be supplied to the power distribution grid in the future, and information on allowable ranges of the amount of power demand and the amount of power supply with respect to the planned amounts. The xEMS/apparatus plan DB 18 holds an xEMS/apparatus plan table 18a to represent the plans of the amount of power demand and the amount of power supply by the xEMS 2 or the apparatus 3, and an xEMS/apparatus adjustable capacity margin table 18b to represent the allowable ranges of the amount of the power demand and the amount of power supply by the xEMS 2 or the apparatus 3.

Fig. 7A shows an example of the xEMS/apparatus plan table 18a. In the xEMS/apparatus plan table 18a, one record represents a plan of one xEMS 2 or apparatus 3 in a certain time slot in the future. Each record holds: an ID 18a1 to represent the targeted xEMS 2 or apparatus 3; date and time of start 18a2 of a time slot targeted in the plan; date and time of end 18a3 of the time slot; collection/distribution 18a4 to distinguish whether the plan is created by the xEMS 2 or the apparatus 3 and then collected by the CEMS server 1, or, the plan is created by the CEMS 1 based on the plan of each xEMS 2 or apparatus 3 and then distributed to each xEMS 2 or apparatus 3; date and time of reception/distribution 18a5 to represent date and time of reception of the plan from the xEMS 2 or date and time of distribution of the plan from the CEMS server 1 to the xEMS 2 or the apparatus 3; a planned amount of power demand 18a6 to represent a forecasted amount of power to be supplied from the power distribution grid to the xEMS 2 or the apparatus 3; a planned amount of power supply 18a7 to represent a forecasted amount of power to be supplied from the xEMS 2 or the apparatus 3 to the power distribution grid; a time lag 18a8 between date and time of deadline and date and time of distribution, of adjustable capacity margin information to be described later when "distribution" is inputted to the collection/distribution 18a4; and the like. This information will be hereinafter referred to as plan information.

The plan information can be broadly divided into two categories. One is plan information (hereinafter referred to as xEMS/apparatus planned information) representing the amount of power demand or the amount of power supply in the future by the individual xEMS 2 or apparatus 3. Another is plan information (hereinafter referred to as CEMS planned information) to be created by the CEMS server 1 for each xEMS 2 or apparatus 3 as a result of performing adjustment of power demand and supply in the area on the basis of the xEMS/apparatus planned information concerning the xEMSs 2 and the apparatuses 3 cooperating with the CEMS server 1.

In the former case, regarding the xEMS 2, the xEMS 2 creates the plan information by itself. Then, the information is received by the CEMS server 1 and the information collection program 11a registers the record. In the meantime, regarding the apparatus 3, a batch of the apparatus demand forecast program 11b is started on the daily or hourly basis, for example. Thus, the apparatus record information on the apparatus 3 targeted for plan development is acquired from the xEMS/apparatus record table 18a, and a plan for the next day or one hour later is developed on the basis of information in a weather DB 19 to be described later. In this case, well known techniques disclosed in Japanese Patent Application Laid-open Publications Nos. Hei 10-108486, 2003-18763, and the like are used for the processing. In the latter case, records are registered in accordance with processing by the CEMS server 1 to be described later. Here, one or more records are registered for each xEMS 2 or apparatus 3.

Fig. 7B shows an example of the xEMS/apparatus adjustable capacity margin table 18b. Here, the adjustable capacity margin represents an adjustable capacity margin with respect to the amount of power demand or the amount of power supply in the xEMS/apparatus planned information on each xEMS 2 or apparatus 3. The adjustable capacity margin means how much each of the amount of power demand and the amount of power supply can be increased or reduced with respect to the corresponding value in the plan information. In the xEMS/apparatus adjustable capacity margin table 18b, one record represents one piece of the information concerning the adjustable capacity margin. Each record holds: an ID 18b1 of the targeted xEMS 2 or apparatus 3; date and time of start 18b2 of a period to hold an adjustable capacity margin; date and time of end 18b3 of the period; date and time of reception 18b4 to represent date and time of reception of the record by the CEMS server 1; date and time of deadline 18b5 to represent a deadline for acceptance of the CEMS planned information by the xEMS 2 or the apparatus 3, the CEMS planned information being created by the CEMS server 1 on the basis of the adjustable capacity margin; a demand adjustment range 18b6 to represent an adjustable capacity margin concerning the amount of power demand; a supply adjustment range 18b7 to represent an adjustable capacity margin concerning the amount of power supply; completion 18b8 to represent whether or not creation of the CEMS planned information using the targeted record is completed; and the like. This information will be hereinafter referred to as adjustable capacity margin information.

When the adjustable capacity margin information concerns the xEMS 2, the xEMS 2 creates the adjustable capacity margin information by itself based on maximum amounts of power consumption and maximum amounts of power generation of the apparatuses in the xEMS 2, or on the forecasted amount of charge in the storage battery in a corresponding period, and the like. The xEMS 2 transmits the information to the CEMS server 1. Upon receipt of the information, the information collection program 11a of the CEMS server 1 registers a record with the xEMS/apparatus adjustable capacity margin table 18b.

Although illustration is omitted, the xEMS/apparatus configuration table 16a of the CEMS server 1 holds the amount of maximum power consumption and the amount of maximum power generation, as attribute information on each apparatus 3. Moreover, the xEMS/apparatus record table 17a of the CEMS server 1 holds an amount of charge in each apparatus 3 on a moment-to-moment basis. In this case, the apparatus demand forecast program 11b of the CEMS server 1 creates and registers the adjustable capacity margin information simultaneously with creation of the plan information. In the case of the apparatus 3, the date and time of deadline 18b5 is set to the same as the date and time of end 18b3 of the time slot except for a special circumstance, because the CEMS server 1 can freely control the apparatus 3. One or more records of the adjustable capacity margin information are registered for each xEMS 2 or apparatus 3.

Meanwhile, the weather DB 19 is a DB configured to cause the CEMS server 1 to hold information on weather in a targeted area. The weather DB 19 holds a weather record table 19a to hold information concerning the weather from past to present, and a weather forecast table 19b to hold information concerning weather forecasts in the future.

Fig. 8A shows an example of the weather record table 19a. In the weather record table 19a, one record represents information on weather at a certain point in the past. Each record holds: date and time 19a1 targeted by the record; weather 19a2 to represent a meteorological condition such as a fine, cloudy, rainy, or snowy condition; temperature 19a3 at the point of time; duration of sunshine 19a4 from previous date and time to the date and time targeted by the record; and the like. This information will be hereinafter referred to as weather record information. The information collection program 11a generates and transmits a request to information providing service 6 periodically or every three hours, for example. The record is registered on the basis of information acquired as a response thereto.

Fig. 8B shows an example of the weather forecast table 19b. In the weather forecast table 19b, one record represents a forecast of weather at a certain point in the future. Each record holds: targeted date and time 19b1 targeted by the record; creation date and time 19b2 to represent date and time when the forecast in the record is created; weather 19b3 to represent a forecasted meteorological condition; forecasted temperature 19a4; forecasted duration of sunshine 19a5 from previous targeted date and time to the date and time targeted by the record; and the like. This information will be hereinafter referred to as weather forecast information. The CEMS server 1 periodically acquires the information on the record from the information providing service 6 as in the case of the weather record information. When the record on the same targeted date and time already exists in the weather forecast table 19b, the CEMS server 1 either overwrites the existing record with the acquired weather forecast information if its creation date and time 19b2 is later, or discards the acquired information if its creation date 19b2 is older.

Although illustration is omitted, a calendar information DB is provided in addition to the aforementioned DBs. This DB holds information on years, months, and days as well as days of the week from past to present, as well as information on whether or not a particular day is a holiday.

Next, operations of the programs of the CEMS server 1 will be described. As described previously, the information collection program 11a performs: acquisition of the power distribution network configuration information, the power distribution record information, and the information concerning the relation between each xEMS 2 or apparatus 3 and the pole transformer 5 in the xEMS/apparatus configuration information from the power distribution system 4, and registration thereof; acquisition of the weather record and the forecast information from the information providing service 6, and registration thereof; acquisition of the xEMS record information, the xEMS planned information, and the xEMS adjustable capacity margin information from the xEMS 2, and registration thereof; and acquisition of values of the amount of power usage and the amount of power supply from the apparatus 3.

In this embodiment, the xEMS record information is created at predetermined time intervals. The xEMS record information is assumed to be newly created by the xEMS 2 after a lapse of a predetermined time interval from the date and time of end of the xEMS record information that was created and transmitted most recently, and to be transmitted to the CEMS server 1. In addition, the xEMS planned information and the xEMS adjustable capacity margin information is assumed to be transmitted from the xEMS 2 to the CEMS server 1 at each date and time targeted for plan development by the long-period plan formulation program 11c to be described later. For example, if the long-term plan formulation program 11c is designed to perform plan formulation, for a whole day of the following day, at 12 o'clock on the preceding day, then the xEMS planned information and the xEMS adjustable capacity margin information is assumed to be transmitted from the xEMS 2 to the CEMS server 1 by 12 o'clock on the day before the targeted date and time. The information on the amount of power usage and the amount of power supply acquired from the apparatus 3 is registered with a table of a not-illustrated DB.

As described previously, the apparatus demand forecast program 11b creates the apparatus record information, the apparatus planned information, and the apparatus adjustable capacity margin information on the basis of the information on the amount of power usage and the amount of power supply acquired from the apparatus 3, and registers the created information with the DBs. As in the case of creation of the record information on the xEMS 2, the creation of the apparatus record information is assumed to be executed on the basis of the information on the power usage and supply by each apparatus immediately after a lapse of a predetermined time interval from the date and time of end of the record information that was created and transmitted most recently.

The apparatus planned information and the apparatus adjustable capacity margin information is assumed to be transmitted from the xEMS 2 to the CEMS server 1 by the time to start the long-period plan formulation program 11c. In the case of the apparatus 3, the planned information is not created by the apparatus demand forecast program 11b. The apparatus demand forecast program 11b creates only the adjustable capacity margin information. The planned information may also be created only by the long-period plan formulation program 11c or the short-period plan formulation program 11e to be described later.

The long-period plan formulation program 11c is a program designed to create the CEMS planned information on the amount of power demand and the amount of power supply by the xEMS 2 or the apparatus 3 for a long period (which is assumed to be a period of half a day to one day in this embodiment) in consideration of the adjustment of power demand and supply in the area and the power distribution grid, and on the basis of the xEMS/apparatus planned information and the xEMS/apparatus adjustable capacity margin information.

### ---Processing Flow Example---

Fig. 9 is a view showing a procedural example 1 of a power management method of the embodiment of the present invention, which is a flowchart of processing of the long-period plan formulation program 11c. The processing will be described below with reference to this drawing. In this case, the long-period plan formulation program 11c acquires the feeder, the date, and the time slot, which are targeted for plan development, from a given apparatus or a memory that holds the corresponding information in advance, for example. When the plan for the following day is developed at 12 o'clock on the preceding day, the plans for the following day are developed for all the targeted feeders. Accordingly, when the time interval from the date and time of start to the date and time of end of the CEMS planned information is set to one hour, then the processing in Fig. 9 is executed the number of times calculated by multiplying the number of the targeted feeders by 24 times. In this case, a counter program that is different from the long-period plan formulation program 11c holds: a targeted feeder ID list; the date; the time interval; feeder IDs for which the plans have already been developed; and a targeted time slot (the date and time of start and the date and time of end) of the planned information. This program starts the long-period plan formulation program 11c by using each feeder ID and each targeted time slot as parameters. When the long-period plan formulation program 11c is started, the long-period plan formulation program 11c acquires the feeder ID and the date and time of start and the date and time of end of the targeted time slot (S101).

Based on the acquired feeder ID, the long-period plan formulation program 11c searches for the ID of the pole transformer 5 located on the most upstream side of the feeder from the power distribution configuration table 14a. In addition, the long-period plan formulation program 11c sets the pole transformer ID 14a1 acquired as a result of the search to a transformer targeted for plan development. In the example of Fig. 2, when the feeder ID 14a2 is "001", the long-period plan formulation program 11c acquires the pole transformer ID 14a1 "0011" (S102).

Next, the long-period plan formulation program 11c acquires the xEMSs 2 and the apparatuses 3 to be coupled to the targeted transformer from the xEMS/apparatus configuration table 16a on the basis of the pole transformer ID 16a3 of the targeted transformer. In the example of Fig. 4, the long-period plan formulation program 11c can acquire two IDs 16a1 "00111" and "00112" of the xEMSs 2, and an ID 16a1 "00113" of the apparatus 3 (S103).

The long-period plan formulation program 11c acquires the xEMS/apparatus planned information corresponding to the time slot acquired in S101 in terms of each xEMS 2 and apparatus 3 acquired in S103 from the xEMS/apparatus plan table 18a. The long-period plan formulation program 11c acquires any piece of the xEMS/apparatus planned information if only a part of the information is found in the time slot mentioned in S101. For instance, when the targeted time slot is "January 20 from 10:00 to 11:00" in the example of Fig. 7A, the long-period plan formulation program 11c can acquire the amount of power demand 18a6 "200" being a record on a first row as the planned information of the xEMS having the ID 18a1 "00111", and the amount of power supply 18a7 "500" being a record on a second row as the planned information of "00112". However, since the record of ID: 00112 belongs to the targeted time slot only for thirty minutes, the long-period plan formulation program 11c converts a half of the amount of power supply, namely, "250" into the amount of power in the targeted time slot (S104).

The long-period plan formulation program 11c sums up the amounts of power acquired in S104 in terms of the transformer 5. When the pole transformer 5 is on the most upstream side of the feeder, a reverse power flow value to be described later is equal to "0". Hence, the long-term plan formulation program 11c sums up only the values acquired in S104. In the above-described example, a total amount of demand is equal to "200" and a total amount of supply is equal to "250" (S105).

Meanwhile, the long-period plan formulation program 11c compares the total amount of demand with the total amount of supply, which are calculated in S105. If the total amount of supply is greater, the long-period plan formulation program 11c determines that the there is a power surplus, and proceeds to processing of S107. On the other hand, if the total amount of demand is greater, the long-period plan formulation program 11c determines that there is a power shortage, and proceeds to processing of S108 (S106).

Processing for the power surplus is performed in terms of the pole transformer 5 in S107 while processing for the power shortage is performed likewise in S108. Details of each processing will be described later.

After the processing of S107 or S108 is performed, the long-period plan formulation program 11c searches the power distribution configuration table 14a and checks whether or not there is another pole transformer 5 located downstream on the same feeder. If there is the transformer 5 placed downstream, the long-period plan formulation program 11c proceeds to processing of S110. On the other hand, if there is no such a transformer 5, the long-period plan formulation program 11c terminates the processing, and performs processing concerning a subsequent time slot or another feeder as appropriate. In the example of Fig. 2, there is the downstream pole transformer ID 14a4 "0012" with respect to the pole transformer ID 14a1: 0011. Accordingly, the long-period plan formulation program 11c proceeds to the processing of S110 (S109).

When there is the downstream pole transformer 14a4, the long-period plan formulation program 11c sets the pole transformer corresponding to the ID as the transformer targeted for plan development, and repeats the processing of S103 (S110) .

The long-period plan formulation program 11c repeats the above-described series of processing, and terminates the processing when the processing is performed on all the pole transformers 5 placed on the feeder.

Next, the processing of S107 will be described below with reference to a flowchart of Fig. 10. In this case, the long-period plan formulation program 11c calculates a difference between the total amount of demand and the total amount of supply compared in S106. Then, the long-period plan formulation program 11c searches the adjustable capacity margin table 18b in terms of each xEMS 2 or apparatus 3 acquired in S103 on the basis of the ID 18b1 of the xEMS 2 or the apparatus 3 as well as the date and time of start 18b2 and the date and time of end 18b3 of the targeted time slot, thereby acquiring the adjustable capacity margin information with positive values of the demand adjustment range 18b6. However, regarding the adjustable capacity margin information targeted for acquisition in this case, the target for acquisition is limited to any record that satisfies a condition that time calculated by subtracting preset estimated processing time from the time of deadline 18b5 of the corresponding record turns out to be the time later than current time during the processing. This is intended to exclude the adjustable capacity margin information that goes beyond the time of deadline 18b5 or is likely to go beyond the time of deadline 18b5 during the processing. Unlike the case in S104, any record of the adjustable capacity margin information having the time slot extending across the entire targeted time slot is regarded as the target for acquisition in this case.

Assuming that the estimated processing time is "one hour" and the time to perform the processing is in a range of "January 19, 12:00 to 13:00", the records on the first and second rows can be acquired as the adjustable capacity margin information in the example of Fig. 7B. The record on the first row means the fact that the amount of power demand of the xEMS 2 having the ID 18b1 "00111" can be further increased by +80 relative to the amount of power demand according to the plan information (S107-1).

Based on the adjustable capacity margin information acquired in S107-1, the long-period plan formulation program 11c creates the CEMS planned information for increasing the amount of power demand by the xEMS 2 or the apparatus 3 corresponding to the acquired adjustable capacity margin information, and stores the CEMS planned information in the memory 11. Here, if there is already the plan information concerning the same xEMS 2 or apparatus 3, which has the value "collection" for the collection/distribution 18a4, then the value is added to the plan information. Thereafter, the long-period plan formulation program 11c sums up the amount of power demand increased by the CEMS planned information thus created and the amount of power demand previously calculated in S105 (S107-2), and then compares the resultant value with the amount of power supply calculated in S105 (S107-3) . However, in the course of creation of the plan information, the creation of the plan information for the xEMS 2 has priority over that for the apparatus 3. Accordingly, only the plan information for the xEMS 2 is created first, and then the plan information for the apparatus 3 is created if the amount of power demand is still smaller than the amount of power supply. In the example of Fig. 7B, the amount of power supply is greater by "50" in S105. However, since the amount of power demand can be increased up to "80", the plan is developed for the xEMS 2 having the ID: 00111 so as to increase its amount of power demand by "50" .

As in the above-described example, when the amount of power demand becomes equal to or greater than the amount of power supply, the long-period plan formulation program 11c proceeds to the processing of S107-4 to set zero to an amount of the reverse power flow (S107-4), and then terminates the processing of S107. Here, the amount of the reverse power flow means a power capacity that causes a reverse power flow from the pole transformer 5 to the power distribution grid. In S107-4, the amount of the reverse power flow is zero since the amount of power demand is equal to or greater than the amount of power supply.

On the other hand, the long-period plan formulation program 11c proceeds to processing of S107-5 and subsequent processing if the amount of power demand falls below the amount of power supply even after the plans for increasing the amount of power demand are developed for all the corresponding adjustable capacity margins in S107-2. This processing is the processing to reduce the amount of power supply down to such a capacity to allow the reverse power flow to occur. Here, the reduction is made on the basis of configuration and record information on the power distribution grid.

In S107-5, the long-period plan formulation program 11c calculates a difference by subtracting the amount of power demand from the amount of power supply, and then calculates how much capacity the difference can supply as the reverse power flow to the power distribution grid. In the course of the calculation, well known techniques disclosed in such as Japanese Patent Application Laid-open Publication No. 2009-207320 are used. Here, the capacities of the reverse power flow on the targeted pole transformer 5, a pole transformer 5 located immediately downstream, a pole transformer 5 located further downstream thereof, and so on to a pole transformer 5 located on the most downstream side are respectively calculated on a pro-rata basis (S107-5) .

Meanwhile, the long-period plan formulation program 11c acquires the weather forecast information on the time slot targeted for plan development from the weather forecast table 19b. Further, the long-period plan formulation program 11c acquires items on the date targeted for plan development from the calendar information, namely, as to which day of the week the date is and whether the date is a weekday or holiday. Then, the long-period plan formulation program 11c acquires a past date, which can be deemed to have the same weather or meteorological phenomenon, from the weather record information. Similarly, the long-period plan formulation program 11c acquires a past date, which is the same as the targeted date in terms of the season, the day of the week, the weekday or holiday, from the calendar information. Here, definitions are registered in advance which specify criteria according to which two dates can be deemed to belong to the same categories in the weather, the meteorological phenomenon, the season, the day of the week, and the weekday or holiday. The long-period plan formulation program 11c extracts the date which meets these AND conditions. Then, the long-period plan formulation program 11c acquires the power distribution record information on the pole transformer 5 targeted for plan development from the power distribution record table 15a, the information corresponding to the same time slit on that date. Further, the long-period plan formulation program 11c repeats this processing until completing the processing for the pole transformer 5 on the most downstream side, as has similarly been repeated in S107-5 (S107-6).

The long-period plan formulation program 11c adds the amount of the reverse power flow acquired in S107-5 to a capacity calculated from a voltage value and a current value in the power distribution record information acquired in S107-6. Then, the long-period plan formulation program 11c acquires the allowable capacity 14a5 of the corresponding pole transformer 5 from the power distribution configuration information, and compares the allowable capacity 14a5 with the added value to check whether the added value falls within the allowable capacity. This processing is similarly repeated until completing the processing for the pole transformer 5 on the most downstream side. Instead, the long-period plan formulation program 11c may multiply the allowable capacity 14a5 by a preset safety factor, and use the resultant value for comparison (S107-7).

The long-period plan formulation program 11c proceeds to processing of S107-9 when the added values concerning all the pole transformers 5 down to the one on the most downstream side fall within the allowable capacity. On the other hand, the long-period plan formulation program 11c proceeds to processing of S107-10 if any one of the added values does not fall within the allowable capacity (S107-8).

When all the added values fall within the allowable capacity, the long-period plan formulation program 11c transmits the CEMS planned information created in S107-2 to the corresponding xEMSs 2 and apparatuses 3, and adds the CEMS planned information to the xEMS/apparatus plan table 18a. A record on a third row in Fig. 7A is an example of a record thus added. In the case of the CEMS planned information, "distribution" is inputted to the collection/distribution 18a4, and a difference between the date and time of deadline 18b5 of the adjustable capacity margin information used in S107-1 and the date and time of distribution 18a5 is registered as the time lag 18a8. Furthermore, the long-period plan formulation program 11c updates a flag of the completion 18b8 of the used adjustable capacity margin information. Then, the long-period plan formulation program 11c sets combinations, each of which is formed from one of the pole transformers 5 on the downstream calculated in S107-7 and the corresponding amount of the reverse power flow, to the memory 11. If the memory 11 already has the amount of the reverser power flow of the corresponding pole transformer 5, then the long-period plan formulation program 11c adds that value thereto (S107-9). The amount of the reverse power flow thus set is taken out when the processing of S105 is carried out for the corresponding pole transformer 5 as the target, where the amount of the reverse power flow is added as the amount of supply.

On the other hand, if any of the added values does not fall within the allowable capacity, the long-period plan formulation program 11c determines whether or not an amount of a reverse power flow from further upstream of the feeder is present at the most upstream location among the locations where the added values do not fall within the allowable capacity (S107-10) . If the amount of the reverse power flow is present, the long-period plan formulation program 11c performs processing on the xEMS 2 or the apparatus 3 coupled to the upstream pole transformer 5. The processing performed therein is similar to those carried out in S107-1 to S107-2. Thus, the long-period plan formulation program 11c creates the CEMS planned information for increasing the amount of demand based on the adjustable capacity margin. In this way, the capacity attributed to the reverse power flow from the upstream side is reduced. After the plan is developed, the long-period plan formulation program 11c similarly performs the determination processing of S107-8 on all the positions where the added values do not fall within the allowable capacity. By repeating the series of the processing, the long-period plan formulation program 11c develops a plan for dealing with a surplus amount of supply only by means of development of the plan for increasing the amount of demand (S107-11).

In S107-10, if there is no reverse power flow from further upstream of the pole transformer 5 that is located at the most upstream position among the positions where the added values do not fall within the allowable capacity, then it is difficult to develop the plan for dealing with the surplus amount of supply by increasing the amount of demand at that position. In this case, the long-period plan formulation program 11c creates plan information for reducing the amount of supply on the basis of the adjustable capacity margin information (S107-12), and performs the determination processing of S107-8 again. By executing the series of the processing mentioned above, the reverse power flow to the power distribution grid in the amount of supply exceeding the allowable capacity is avoided. The above are the descriptions of the processing for the power surplus in S107.

Next, the processing of S108 being the processing for the power shortage will be described below with reference to a flowchart of Fig. 11. As in the processing of S107, the long-period plan formulation program 11c first calculates the difference between the total amount of demand and the total amount of supply. Then, the long-period plan formulation program 11c acquires the adjustable capacity margin information from the adjustable capacity margin table 18b in terms of each xEMS 2 or apparatus 3 acquired in S103, the information concerning a reduction in the amount of demand or an increase in the amount of supply. However, as in the case of S107-1, regarding the adjustable capacity margin information targeted for acquisition in this case, the target for acquisition is limited to any record, which satisfies the condition that the time calculated by subtracting preset estimated processing time from the time of deadline 18b5 of the corresponding record turns out to be the time later than current time during the processing (S108-1).

The long-period plan formulation program 11c creates the CEMS planned information on the basis of the adjustable capacity margin information acquired in S108-1. Here, the long-period plan formulation program 11c compares between the total amount of demand and the total amount of supply every time the long-period plan formulation program 11c creates a piece of the plan information, so as not to create a plan in which the total amount of demand falls below the total amount of supply. If the total amount of demand falls below the total amount of supply, the long-period plan formulation program 11c abandons the relevant plan and creates different plan information.

The long-period plan formulation program 11c transmits the CEMS planned information thus created to each corresponding xEMS 2 or apparatus 3, and registers the contents with the xEMS/apparatus plan table 18a. This transmission and registration processing is the same as the processing of S107-9 (S108-2).

Thereafter, the long-period plan formulation program 11c sets zero to the amount of the reverse power flow to the downstream, and terminates the processing of S108 (S10S-3). When the power is deficient, the power distribution grid supplies the deficiency. Accordingly, the determination as to whether the amount of demand and the amount of supply are balanced after development of the plan is not carried out. The above are the descriptions of the processing for the power shortage in S108.

The flow of the processing by the long-period plan formulation program 11c has been described above. By performing the above-described processing, the CEMS server 1 can utilize the power, which is originated from renewable energy and supplied from distributed power sources, as effectively as possible. At the same time, the CEMS server 1 can prevent the power in the amount of supply exceeding the allowable capacity of power distribution grid and thus being harmful, from flowing into the power distribution grid. In addition, the CEMS planned information is created on the basis of the adjustable capacity information created by each xEMS 2. Thus, it is possible to create the plan information that is acceptable to each xEMS 2.

If the CEMS planned information created by the long-period plan formulation program 11c is the plan information directed to the apparatus 3, then it is necessary to generate a control command for the apparatus 3 from the plan information and to transmit the control command to the apparatus 3. The control command generation program 11f performs this operation. The control command generation program 11f regularly crawls the contents of the xEMS/apparatus table 18a, and acquires the plan information in the case where "distribution" is inputted to the collection/distribution 18a4 of the information and its ID 18a1 is the ID that represents the apparatus 3. Then, the control command generation program 11f generates a control command in a format appropriate for the apparatus 3. Examples of the control command may include: power on/off; setting of an upper limit of an amount of supply in the case of a solar power generation apparatus; and setting of an amount of discharge, setting of an amount of charge, and so forth in the case of a storage battery. Information on types of control commands that can be generated, formats of the control commands, and the like are held as not-illustrated data items in the xEMS/apparatus configuration table 16a. The control command generation program 11f is designed to acquire the information on the ID of the appropriate apparatus 3 from this table, to generate the control command, and to transmit the control command to the apparatus 3.

As described above, the long-period plan formulation program 11c is designed to formulate the plan so as to prevent the current that exceeds the allowable capacity from flowing to the power distribution grid. In the meantime, it is necessary to monitor the record information on the xEMS 2 or the apparatus 3 so as to avoid occurrence of an incident where the current actually exceeds the allowable capacity.

Fig. 12 shows a flowchart of processing of the monitoring program 11d which performs the monitoring. The processing will be described below with reference to the flowchart. Here, the monitoring program 11d is started by using a targeted feeder ID as a parameter.

In this case, the monitoring program 11d acquires the pole transformer ID 14a1 that corresponds to the targeted feeder ID 14a2 from the power distribution configuration table 14a (S201) . Thereafter, the monitoring program 11d repeats processing up to S210 the same number of times as the number of the pole transformers 5 corresponding to the feeder ID of S201. Here, the repeated processing takes place in the order from the upstream pole transformer 5 (S202).

Regarding the pole transformers 5 targeted for the processing which are acquired in S201, the monitoring program 11d acquires the IDs of the xEMSs 2 and the apparatuses 3 coupled to the pole transformers 5 from the xEMS/apparatus configuration table 16a (S203). Regarding the xEMSs 2 and the apparatuses 3 acquired in S203, the monitoring program 11d acquires the most recent xEMS/apparatus record information from the xEMS/apparatus record table 17a. The monitoring program 11d sums up the amount of power demand and the amount of power supply of each of the acquired records, thereby calculating the amount of the reverse power flow (S204).

The reverse power flow is occurring when the amount of power supply exceeds the amount of power demand in S204. When the reverse power flow is occurring, the monitoring program 11d proceeds to processing of S206. On the other hand, when the reverse power flow is not occurring, the processing for the relevant pole transformer 5 is terminated since there is no problem. Hence, the monitoring program 11d performs the processing of S203 for the pole transformer 5 located immediately downstream as the target for the processing (S205).

When the reverse power flow is occurring, the monitoring program 11d calculates how much reverse power flow value the occurring reverse power flow value at each location can provide to the locations of the pole transformers 5 on the downstream. The well known technique described in conjunction with the explanation of S107-5 is used as the method of calculation. Here, the capacities of the reverse power flow down to the location of the pole transformer 5 on the most downstream side are respectively calculated on a pro-rata basis, and the calculated values are stored in the memory 11. If the memory 11 already has the value of the capacity, then the monitoring program 11d adds the calculated value thereto (S206).

Next, regarding the pole transformer 5 targeted for the processing, the monitoring program 11d finds the amount of the reverse power flow which is calculated from the plan information. The monitoring program 11d acquires the plan information corresponding to each xEMS 2 or apparatus 3 acquired in S203 from the xEMS/apparatus plan table 18a. If there are multiple records for the same time slot with different values of the collection/distribution 18a4, then the monitoring program 11d acquires only the records having the value "distribution" . Based on the plan information thus acquired, the monitoring program 11d calculates the amount of the reverse power flow at the time of planning by summing up the amount of demand and the amount of supply (S207).

The monitoring program 11d compares the reverse power flow value in the plan (a planned value) calculated in S207 with the reverse power flow value from the record information (a recorded value) calculated in S204 (S208) . When the recorded value exceeds the planned value, the monitoring program 11d proceeds to processing of S210. On the other hand, if the recorded value falls below the planned value, the processing for the relevant pole transformer 5 is terminated since there is no problem. Hence, the monitoring program 11d performs the processing of S203 for the pole transformer 5 located immediately downstream as the target for the processing. Note that when the monitoring program 11d performs the processing of S204 for the subsequent pole transformer 5 located immediately downstream, the monitoring program 11d acquires the reverse power flow value of the relevant pole transformer 5 held in the memory 11 in S206, and adds the value as the supply amount (S209).

When the recorded value exceeds the planned value, the monitoring program 11d registers a set of the pole transformer ID, the planned reverse power flow value, the recorded amount of demand, and the recorded amount of supply as risk points in a not-illustrated file or the like (S210) . After performing this registration, the monitoring program 11d proceeds to the processing for the pole transformer 5 located immediately downstream. Note that in this case as well, the monitoring program 11d acquires the reverse power flow value held in the memory in S206 when performing the processing of S204, and adds the value as the supply amount.

The monitoring program 11d repeats the above-described series of processing (S211) down to the pole transformer 5 on the most downstream side, and then terminates the processing. The flow of the processing by the monitoring 11d is as described above.

By performing the above-described processing, the CEMS server 1 can specify the locations on the power distribution grid of occurrence of the reverse power flow which exceeds the amount of the reverse power flow estimated in advance. Hence, the CEMS server 1 can carry out countermeasures to be described later.

The above-described monitoring program 11d has specified the locations of occurrence of the reverse power flow in a scale that exceeds the estimate. Next, it is necessary to develop a short-period plan for each xEMS 2 and apparatus 3 at the specified location so as to reduce the capacity of the reverse power flow. The short-period plan formulation program 11e is the program which develops the short-period plan. Fig. 13 shows a flowchart of processing of the short-period plan formulation program 11e. The processing will be described below with reference to the drawing. At the time of start, this short-period plan formulation program 11e reads the file formed in S209 and performs the processing in Fig. 13 for each pole transformer ID.

In this case, the short-period plan formulation program 11e acquires the pole transformer ID, the planned reverse power flow value, the recorded amount of demand, and the recorded amount of supply, which are the risk points registered in the file. The short-period plan formulation program 11e sets the pole transformer ID as a target for short-period plan formulation, and acquires the xEMSs 2 and the apparatuses 3 coupled to the pole transformer ID from the xEMS/apparatus configuration table 16a. The short-period plan formulation program 11e searches the adjustable capacity margin table 18b for effective adjustable capacity margin information concerning the corresponding time slot by using the IDs of the xEMSs 2 and the apparatuses 3 thus acquired. The expression "effective" therein applies to the adjustable capacity margin information without any flag in the completion 18a8 and yet to pass the date and time of deadline 18b5. Most pieces of the adjustable capacity margin information yet to pass the date and time of deadline 18b5 belong to the apparatuses 3. This is why the xEMSs 2 are preferentially used for formulating the plan in the formulation of the long-period plan, while the apparatuses 3 are reserved for formulation of the short-period plan (S301).

The short-period plan formulation program 11e proceeds to processing of S303 when there is at least a piece of the appropriate adjustable capacity margin information in S301. The short-period plan formulation program 11e proceeds to processing of S306 if there is no appropriate adjustable capacity margin information (S302).

When there is the appropriate adjustable capacity margin information, the short-period plan formulation program 11e creates plan information that enables an increase the amount of demand or a reduction in the amount of supply on the basis of the adjustable capacity margin information, and calculates an amount (a reduction amount) of supply which can be reduced when the plan information is executed. Then, the short-period plan formulation program 11e recalculates the amount of the reverse power flow that flows to the power distribution grid by using the recorded amount of supply and the recorded amount of demand acquired in S301 (S303).

The short-period plan formulation program 11e compares the planned amount of the reverse power flow acquired in S301 with the amount of the reverse power flow reflecting the record and the short-period re-planning, which is recalculated in S303. The short-period plan formulation program 11e proceeds to processing of S305 if the latter falls below former or both values are equal. In the reverse case, the short-period plan formulation program 11e proceeds to processing of S306 (S304).

When the recorded and re-planned amount of the reverse power flow falls below the planned amount of the reverse power flow, the short-period plan formulation program 11e distributes the plan information created in S303 to the corresponding xEMS 2 or apparatus 3. Then, the short-period plan formulation program 11e registers the plan information with the xEMS/apparatus plan table 18a and terminates the processing (S305) . In the case of distribution to the apparatus 3, the control command generation program 11f generates the control command to the apparatus 3 from the plan information as described previously, and transmits the control command to the apparatus 3.

If the amount of the reverse power flow subjected to the re-planning still exceeds the planned amount of the reverser power flow, or if it is not possible to perform the re-planning due to a lack of the appropriate adjustable capacity margin information, then it is necessary to carry out re-planning regarding the pole transformer 5 located upstream of the pole transformer 5 targeted for the short-period plan. The short-period plan formulation program 11e searches the power distribution configuration table 14a on the basis of the pole transformer ID set to the target for the short-period plan in S301. The short-period plan formulation program 11e proceeds to processing of S308 when there is the upstream pole transformer 5. The short-period plan formulation program 11e proceeds to processing of S307 when there is no upstream pole transformer 5, i.e., when the pole transformer 5 targeted for the short-period plan in S301 is the most upstream pole transformer 5 (S306).

When there is no upstream pole transformer 5, the short-period plan formulation program 11e is compelled to acquire the xEMS 2 or the apparatus 3, which has a large amount of supply among the xEMSs 2 and the apparatuses 3 coupled to the pole transformer 5 targeted for the short-period plan, from the xEMS/apparatus record table 17a. If the apparatus 3 is acquired, a control command for power off is transmitted. If the xEMS 2 is acquired, an urgent command to stop the supply of the power to the power distribution grid is transmitted (S307).

When there is the upstream pole transformer 5, the short-period plan formulation program 11e sets its pole transformer ID as the target for the short-period plan. Moreover, the short-period plan formulation program 11e acquires the xEMSs 2 and the apparatuses 3 coupled to the relevant pole transformer ID from the xEMS/apparatus configuration table 16a. Then, the short-period plan formulation program 11e acquires the plan information on the corresponding time slot and the xEMS/apparatus record information respectively from the appropriate tables. Based on the plan information, the short-period plan formulation program 11e calculates the planned reverse power flow value and performs the processing of S301 the subsequent processing (S308) . In the processing of and those subsequent to S301, the short-period plan formulation program 11e calculates amounts of reduction in the amounts of supply attributed to the reverse power flow in S303 on the basis of the amount of reduction in the amount of supply on the upstream, and respectively from the pole transformer 5 targeted for the short-period plan to the downstream pole transformer 5 originally determined as the risk point. Then, the short-period plan formulation program 11e confirms that the recorded and re-planned amount of the reverse power becomes equal to or below the planned amount of the reverse power flow in every pole transformer 5. The flow of the processing by the short-period plan formation program 11e has been described above.

In the above-described processing, when the recorded and re-planned amount of the reverse power flow still exceeds the planned amount of the reverse power flow in S304, the similar processing is performed on the upstream pole transformer 5. Here, if the performance of the processing is likely to adversely affect the power distribution grid due to a delay in correspondence, then the processing of S307 may be performed directly instead of performing the processing on the upstream pole transformer 5.

By performing the above-described processing, when the CEMS server 1 specifies the locations on the power distribution grid of occurrence of the reverse power flow which exceeds the amount of the reverse power flow estimated in advance, the CEMS server 1 can formulate the short-period plan formulation based on the effective adjustable capacity margin information on the locations.

Although the best modes for carrying out the present invention have been specifically described above, the present invention is not limited only to the descriptions and various changes are possible without departing from the scope of the invention. For example, as described above, the power distribution grid sections are defined on the basis of the pole transformers 5 in the embodiment. However, the present invention can also deal with a case of defining the sections based on switches.

The above-described embodiment has been described on the premise that the CEMS server 1 is configured to consolidate the information on the power distribution grid, the information on the xEMSs 2 and the apparatuses 3, and so forth. Nonetheless, in a case of dispersion management of information and functions, for instance, the information and the functions may actually be located anywhere as long as the CEMS server 1 is configured to virtually consolidate the information and the functions, and is thus capable of freely using and referring to the information and functions.

Although the descriptions have been provided for the embodiment, the above-described embodiment is intended to facilitate understanding of the present invention but is not intended to limit the scope of the invention. Various changes and improvements are possible without departing from the scope of the invention, and the invention encompasses such changes, improvements, and equivalents as well.

According to the embodiment, it is possible to perform power supply-demand adjustment among power customers and installations within a given area while taking into account power to be supplied from distributed power sources.

The descriptions of this specification at least clarify the following. Specifically, in the power management apparatus, the arithmetic unit may execute: a processing to receive fourth management information from the second power management apparatuses via the communication unit, the fourth management information representing recorded values of the amounts of power demand and the amounts of power generation by the each customers; a processing to calculate a recorded value of a power capacity flowing on the each power distribution grid section from the recorded values of the amounts of power demand and the amounts of power generation by the each customers represented by the fourth management information; a processing to calculate a planned value of the power capacity flowing on the each power distribution grid section from a plan of at least either amounts of power demand or amounts of power supply by the customers represented by the first management information; and a processing to compare the recorded value and the planned value, and if the recorded value is greater, to detect a power distribution grid section having a possibility of a flow of power exceeding the allowable capacity of power.

Meanwhile, in the power management apparatus, the arithmetic unit may execute: a processing, when the power distribution grid section having the possibility of the flow of the power exceeding the allowable capacity of power is detected, to extract a customer, being capable of adjusting any of the amount of power demand and the amount of power supply, from the third management information as a customer whose recorded value is reducible, and to re-create the first management information including the plan to increase the amount of power demand or reduce the amount of power generation by the extracted customer; and a processing to transmit the re-created first management information at least to the second management apparatus of each customer designated by the re-created first management information.

Meanwhile, in the power management system, the first power management apparatus may execute: a processing to receive fourth management information from the second power management apparatuses via the communication unit, the fourth management information representing recorded values of the amounts of power demand and the amounts of power generation by the each customers; a processing to calculate a recorded value of a power capacity flowing on the each power distribution grid section from the recorded values of the amounts of power demand and the amounts of power generation by the each customers represented by the fourth management information; a processing to calculate a planned value of the power capacity flowing on the each power distribution grid section from a plan of at least either amounts of power demand or amounts of power supply by the customers represented by the first management information; and a processing to compare the recorded value and the planned value, and if the recorded value is greater, to detect a power distribution grid section having a possibility of a flow of power exceeding the allowable capacity of power.

Meanwhile, in the power management system, the first power management device may execute: a processing, when the power distribution grid section having the possibility of the flow of the power exceeding the allowable capacity of power is detected, to extract a customer, being capable of adjusting any of the amount of power demand and the amount of power supply, from the third management information as a customer whose recorded value is reducible, and to re-create the first management information including the plan to increase the amount of power demand or reduce the amount of power generation by the extracted customer; and a processing to transmit the re-created first management information at least to the second management apparatus of each customer designated by the re-created first management information.

### [Reference Signs List]

1 CEMS SERVER (POWER MANAGEMENT APPARATUS, FIRST POWER MANAGEMENT APPARATUS)
2 xEMS (SECOND POWER MANAGEMENT APPARATUS)
3 APPARATUSES
4 POWER DISTRIBUTION SYSTEM (THIRD POWER MANAGEMENT APPARATUS)
5 POLE TRANSFORMER (POWER DISTRIBUTION APPARATUS)
6 INFORMATION PROVIDING SERVICE
11 MEMORY
11a INFORMATION COLLECTION PROGRAM
11b APPARATUS DEMAND FORECAST PROGRAM
11c LONG-PERIOD PLAN FORMULATION PROGRAM
11d MONITORING PROGRAM
11e SHORT-PERIOD PLAN FORMULATION PROGRAM
11f CONTROL COMMAND GENERATION PROGRAM
12 CPU (ARITHMETIC UNIT)
13 COMMUNICATION UNIT
14 POWER DISTRIBUTION NETWORK DB
15 POWER DISTRIBUTION RECORD DB
16 xEMS/APPARATUS CONFIGURATION DB
17 xEMS/APPARATUS RECORD DB
18 xEMS/APPARATUS PLAN DB
19 WEATHER DB
100 POWER MANAGEMENT SYSTEM

## Claims

1. A power management system (100) for a distribution grid and a plurality of customers, the system being a computer system comprising:
a first power management apparatus (1) configured to perform power management by processing a variety of information on each power customer and the power distribution grid;
a second power management apparatus (2) provided to each power customer and configured to perform power supply-demand adjustment of an apparatus (3) as a target of management in the each power customer; and
a third power management apparatus (4) provided to the power distribution grid,
the first power management apparatus (1), the second power management apparatus (2), and the third power management apparatus (4) being communicatively coupled to one another, wherein
the second power management (2) apparatus includes
a communication unit and an arithmetic unit, wherein the second power management (2) apparatus is adapted
a) to monitor an amount of power demand and an amount of power generation by each customer,
b) to create second management information representing an amount of power demand and an amount of power generation by the each customer at a given future time point on basis of the values of amount of power demand and the amount of power generation obtained by monitoring,
c) to communicate with the apparatus (3) as a target of management in the each power customer and the a third power management apparatus (4), and
d) to transmit the created second information to the first power management apparatus (1),
the third power management apparatus (4) is an information processing apparatus configured to monitor and control a power distribution grid and hold configuration information of the power distribution apparatuses in the power distribution grid, the third power management apparatus (4) being configured to execute processing and to transmit the configuration information to the first power management apparatus (1), the configuration information including
e) pieces of information on power distribution apparatuses contained in the power distribution grid,
f) each customer coupled to the power distribution apparatus, consuming power and supplying generated power to the grid, and
g) an allowable capacity of power for each of power distribution grid sections defined by the power distribution apparatuses, and
the first power management apparatus (1) includes a communication unit (13) and an arithmetic unit, wherein the first power management apparatus (1) is adapted
h) to receive the second management information and the third management information from the second power management apparatuses (2) via the communication unit (13),
i) to receive the configuration information from the third power management apparatus (4) via the communication unit (13),
j) to calculate a sum of amounts of power demand and a sum of amounts of power generation at a given future time point in a given area of the power distribution grid on the basis of the second management information, and
k) to calculate any of an amount of power surplus and an amount of power shortage in the given area at the given future time point using a difference between the sum of amounts of power demand and the sum of amounts of power generation calculated in step j),
**characterized in that**
the second power management (2) apparatus is further adapted
l) to create third management information representing an amount of power demand and an amount of power generation adjustable by the each customer from the amount of power demand and the amount of power generation in the second management information,
m) to transmit the created third information to the first power management apparatus (1); the first power management apparatus (1) is further adapted
n) to create first management information based on the configuration information and the third management information, wherein the first management information includes a plan to reduce the amount of power surplus by increasing the amounts of power demand or reducing the amounts of power generation of customers connected to the power distribution grid to be within a range not exceeding the allowable capacity of power for each power distribution grid section, and
o) to transmit the first management information at least to the second management apparatus (2) of each customer designated by the first management information.

2. The power management system according to claim 1, wherein the first power management apparatus (1) is further configured
p) to receive fourth management information from the second power management apparatuses (2) via the communication unit,
the fourth management information representing past values of the amounts of power demand and the amounts of power generation by the customers connected to the second power management apparatus (2);
q) to calculate a past value of a power capacity of power on the each power distribution grid section from the past values of the amounts of power demand and the amounts of power generation by each of the customers represented by the fourth management information;
r) to calculate a planned value of the power capacity of power on the each power distribution grid section from a plan of at least either of amounts of power demand and amounts of power supply by each of the customers represented by the first management information; and
s) to compare the calculated past value and the planned value, and if the calculated past value is greater, to detect a power distribution grid section having a possibility of a flow of power exceeding the allowable capacity of power.

3. The power management system according to claim 2, wherein the first power management apparatus (1) is further configured
t) to extract, when the power distribution grid section having the possibility of the flow of power exceeding the allowable capacity of power is detected, based on the third management information, a customer being capable of adjusting any of the amount of power demand and the amount of power supply, as a customer whose calculated past value is reducible,
u) to re-create the first management information including the plan to increase the amount of power demand or reduce the amount of power generation by the extracted customer; and
v) to transmit a re-created first management information at least to the second management apparatus (2) of each customer designated by the re-created first management information.

4. A power management method implemented by a system having the features of anyone of the foregoing claims, the method comprising:
causing the second power management (2)
i) to monitor an amount of power demand and an amount of power generation by each customer,
ii) to create second management information representing an amount of power demand and an amount of power generation by the each customer at a given future time point on basis of the values of amount of power demand and the amount of power generation obtained by monitoring,
iii) to create third management information representing an amount of power demand and an amount of power generation adjustable by the each customer from the amount of power demand and the amount of power generation in the second management information,
iv) to communicate with the apparatus (3) as a target of management in the each power customer and the a third power management apparatus (4)and
v) to transmit the created second and third information to the first power management apparatus (1),
causing the third power management apparatus (4) to execute processing and to transmit the configuration information to the first power management apparatus (1), the configuration information including
vi) pieces of information on power distribution apparatuses contained in the power distribution grid,
vii) each customer coupled to the power distribution apparatus, consuming power and supplying generated power to the grid, and
viii) an allowable capacity of power for each of power distribution grid sections defined by the power distribution apparatuses, and
causing the first power management apparatus (1)
ix) to receive the second management information and the third management information from the second power management apparatuses (2) via the communication unit (13),
x) to receive the configuration information from the third power management apparatus (4) via the communication unit (13),
xi) to calculate a sum of amounts of power demand and a sum of amounts of power generation at a given future time point in a given area of the power distribution grid on the basis of the second management information, and
xii) to calculate any of an amount of power surplus and an amount of power shortage in the given area at the given future time point using a difference between the sum of amounts of power demand and the sum of amounts of power generation calculated in step xi),
xiii) to create first management information based on the configuration information and the third management information, wherein the first management information includes a plan to reduce the amount of power surplus by increasing the amounts of power demand or reducing the amounts of power generation of customers connected to the power distribution grid to be within a range not exceeding the allowable capacity of power for each power distribution grid section, and
xiv) to transmit the first management information at least to the second management apparatus (2) of each customer designated by the first management information.

## Patentansprüche

1. Leistungsmanagementsystem (100) für ein Verteilernetz und mehrere Kunden, wobei das System ein Computersystem ist, das Folgendes umfasst:
eine erste Leistungsmanagementvorrichtung (1), die konfiguriert ist, Leistungsmanagement durch das Verarbeiten mehrerer Informationen zu jedem Stromkunden und zum Stromverteilernetz auszuführen;
eine zweite Leistungsmanagementvorrichtung (2), die für jeden Stromkunden bereitgestellt ist und konfiguriert ist, die Stromversorgungsbedarfsanpassung einer Vorrichtung (3) als Managementziel für jeden Stromkunden auszuführen; und
eine dritte Leistungsmanagementvorrichtung (4), die im Stromverteilernetz bereitgestellt ist,
die erste Leistungsmanagementvorrichtung (1), die zweite Leistungsmanagementvorrichtung (2) und die dritte Leistungsmanagementvorrichtung (4), die kommunikativ miteinander gekoppelt sind, wobei
die zweite Leistungsmanagementvorrichtung (2) eine Kommunikationseinheit und eine Recheneinheit umfasst, wobei die zweite Leistungsmanagementvorrichtung (2) dafür ausgelegt ist,
a) eine Menge des Leistungsbedarfs und eine Menge der Leistungserzeugung von jedem Kunden zu überwachen,
b) zweite Managementinformationen, die eine Menge des Leistungsbedarfs und eine Menge der Leistungserzeugung von jedem Kunden zu einem gegebenen zukünftigen Zeitpunkt auf Grundlage der durch Überwachung erhaltenen Werte der Menge des Leistungsbedarfs und der Menge der Leistungserzeugung repräsentieren, zu erzeugen,
c) mit der Vorrichtung (3) als Managementziel für jeden Stromkunden und der dritten Leistungsmanagementvorrichtung (4) zu kommunizieren, und
d) die erstellten zweiten Informationen auf die erste Leistungsmanagementvorrichtung (1) zu übertragen,
die dritte Leistungsmanagementvorrichtung (4) eine Datenverarbeitungsvorrichtung ist, die konfiguriert ist, ein Stromverteilernetz zu überwachen und zu steuern und Konfigurationsinformationen der Leistungsverteilungsvorrichtungen im Stromverteilernetz aufzunehmen,
die dritte Leistungsmanagementvorrichtung (4) konfiguriert ist, die Verarbeitung auszuführen und die Konfigurationsinformationen auf die erste Leistungsmanagementvorrichtung (1) zu übertragen; wobei die Konfigurationsinformationen Folgendes enthalten:
e) Informationen über im Stromverteilernetz enthaltene Leistungsverteilervorrichtungen,
f) jeden an die Leistungsverteilervorrichtung gekoppelten Kunden, der Strom verbraucht und erzeugten Strom an das Netz liefert, und
g) eine zulässige Leistungskapazität für jeden von durch die Leistungsverteilervorrichtung definierten Stromverteilernetzabschnitten, und
die erste Leistungsmanagementvorrichtung (1) eine Kommunikationseinheit (13) und eine Recheneinheit umfasst, wobei die erste Leistungsmanagementvorrichtung (1) angepasst ist,
h) die zweiten Managementinformationen und die dritten Managementinformationen von den zweiten Leistungsmanagementvorrichtungen (2) über die Kommunikationseinheit (13) zu empfangen,
i) die Konfigurationsinformationen von der dritten Leistungsmanagementvorrichtung (4) über die Kommunikationseinheit (13) zu empfangen,
j) eine Summe von Mengen des Leistungsbedarfs und eine Summe von Mengen der Leistungserzeugung zu einem gegebenen zukünftigen Zeitpunkt in einem gegebenen Bereich des Stromverteilernetzes auf Grundlage der zweiten Managementinformationen zu berechnen und
k) eine Menge eines Leistungsüberschusses oder eine Menge eines Leistungsmangels in dem gegebenen Bereich zu dem gegebenen zukünftigen Zeitpunkt mittels eines Unterschieds zwischen der Summe von Mengen des Leistungsbedarfs und der Summe von Mengen der Leistungserzeugung, die in Schritt j) berechnet wurden, zu berechnen,
**dadurch gekennzeichnet, dass**
die zweite Leistungsmanagementvorrichtung (2) ferner angepasst ist,
l) von jedem Kunden einstellbar dritte Managementinformationen, die eine Menge des Leistungsbedarfs und eine Menge der Leistungserzeugung repräsentieren, aus der Menge des Leistungsbedarfs und der Menge der Leistungserzeugung in den zweiten Managementinformationen zu erzeugen,
m) die erzeugten dritten Informationen an die erste Leistungsmanagementvorrichtung (1) zu übertragen;
die erste Leistungsmanagementvorrichtung (1) ferner angepasst ist,
n) erste Managementinformationen auf Grundlage der Konfigurationsinformationen und der dritten Managementinformationen zu erzeugen, wobei die ersten Managementinformationen einen Plan zum Verringern der Menge des Leistungsüberschusses durch Erhöhen der Mengen des Leistungsbedarfs oder Verringern der Mengen der Leistungserzeugung von mit dem Stromverteilernetz verbundenen Kunden, um innerhalb eines die zulässige Leistungskapazität jedes Stromverteilernetzabschnitts nicht überschreitenden Bereichs zu sein, umfassen, und
o) die ersten Managementinformationen mindestens an die zweite Managementvorrichtung (2) jedes von den ersten Managementinformationen benannten Kunden zu übertragen.

2. Leistungsmanagementsystem nach Anspruch 1, wobei die erste Leistungsmanagementvorrichtung (1) ferner konfiguriert ist,
p) vierte Managementinformationen von den zweiten Leistungsmanagementvorrichtungen (2) über die Kommunikationseinheit zu empfangen, wobei die vierten Managementinformationen vergangene Werte der Mengen des Leistungsbedarfs und der Mengen der Leistungserzeugung durch die mit der zweiten Leistungsmanagementvorrichtung (2) verbundenen Kunden repräsentieren;
q) einen früheren Wert einer Leistungskapazität der Leistung auf jedem Stromverteilernetzabschnitt aus den vergangenen Werten der Mengen des Leistungsbedarfs und der Mengen der Leistungserzeugung durch jeden der durch die vierten Managementinformationen repräsentierten Kunden zu berechnen;
r) einen geplanten Wert der Leistungskapazität der Leistung auf jedem Stromverteilernetzabschnitt aus einem Plan mindestens von Mengen des Leistungsbedarfs oder von Mengen der Leistungserzeugung durch jeden der durch die ersten Managementinformationen repräsentierten Kunden zu berechnen; und
s) den berechneten vergangenen Wert und den geplanten Wert zu vergleichen und dann, wenn der berechnete vergangene Wert größer ist, einen Stromverteilernetzabschnitt, für den die Möglichkeit eines die zulässige Leistungskapazität überschreitenden Leistungsflusses besteht, zu ermitteln.

3. Leistungsmanagementsystem nach Anspruch 2, wobei die erste Leistungsmanagementvorrichtung (1) ferner konfiguriert ist,
t) dann, wenn der Stromverteilernetzabschnitt mit der Möglichkeit eines die zulässige Leistungskapazität überschreitenden Leistungsflusses ermittelt ist, auf Grundlage der dritten Managementinformationen einen Kunden, der in der Lage ist, die Menge des Leistungsbedarfs und die Menge der Leistungserzeugung anzupassen, als einen Kunden, dessen berechneter vergangener Wert reduzierbar ist, zu extrahieren,
u) die ersten Managementinformationen einschließlich des Plans, durch den extrahierten Kunden die Menge des Leistungsbedarfs zu erhöhen oder die Menge der Leistungserzeugung zu verringern, neu zu erstellen; und
v) neu erstellte erste Managementinformationen mindestens auf die zweite Managementvorrichtung (2) jedes durch die neu erstellten ersten Managementinformationen benannten Kunden zu übertragen.

4. Leistungsmanagementverfahren, das durch ein System mit den Merkmalen eines der vorhergehenden Ansprüche implementiert ist, wobei das Verfahren Folgendes umfasst:
Veranlassen der zweiten Leistungsmanagement (2),
i) eine Menge des Leistungsbedarfs und eine Menge der Leistungserzeugung von jedem Kunden zu überwachen,
ii) zweite Managementinformationen, die eine Menge des Leistungsbedarfs und eine Menge der Leistungserzeugung von jedem Kunden zu einem gegebenen zukünftigen Zeitpunkt auf Grundlage der durch Überwachung erhaltenen Werte der Menge des Leistungsbedarfs und der Menge der Leistungserzeugung repräsentieren, zu erzeugen,
iii) von jedem Kunden einstellbar dritte Managementinformationen, die eine Menge des Leistungsbedarfs und eine Menge der Leistungserzeugung repräsentieren, aus der Menge des Leistungsbedarfs und der Menge der Leistungserzeugung in den zweiten Managementinformationen zu erzeugen,
iv) mit der Vorrichtung (3) als Managementziel für jeden Stromkunden und der dritten Leistungsmanagementvorrichtung (4) zu kommunizieren und
v) die erstellten zweiten und dritten Informationen auf die erste Leistungsmanagementvorrichtung (1) zu übertragen,
wodurch die dritte Leistungsmanagementvorrichtung (4) veranlasst wird, die Verarbeitung auszuführen und die Konfigurationsinformationen auf die erste Leistungsmanagementvorrichtung (1) zu übertragen; wobei die Konfigurationsinformationen Folgendes enthalten:
vi) Informationen über im Stromverteilernetz enthaltene Leistungsverteilervorrichtungen ,
vii) jeden an die Leistungsverteilervorrichtung gekoppelten Kunden, der Strom verbraucht und erzeugten Strom an das Netz liefert, und
viii) eine zulässige Leistungskapazität für jeden von durch die Leistungsverteilervorrichtung definierten Stromverteilernetzabschnitten, und
was die erste Leistungsmanagementvorrichtung (1) veranlasst,
ix) die zweiten Managementinformationen und die dritten Managementinformationen von den zweiten Leistungsmanagementvorrichtungen (2) über die Kommunikationseinheit (13) zu empfangen,
x) die Konfigurationsinformationen von der dritten Leistungsmanagementvorrichtung (4) über die Kommunikationseinheit (13) zu empfangen,
xi) eine Summe von Mengen des Leistungsbedarfs und eine Summe von Mengen der Leistungserzeugung zu einem gegebenen zukünftigen Zeitpunkt in einem gegebenen Bereich des Stromverteilernetzes auf Grundlage der zweiten Managementinformationen zu berechnen und
xii) eine Menge eines Leistungsüberschusses oder eine Menge eines Leistungsmangels in dem gegebenen Bereich zu dem gegebenen zukünftigen Zeitpunkt mittels eines Unterschieds zwischen der Summe von Mengen des Leistungsbedarfs und der Summe von Mengen der Leistungserzeugung, die in Schritt xi) berechnet wurden, zu berechnen,
xiii) erste Managementinformationen auf Grundlage der Konfigurationsinformationen und der dritten Managementinformationen zu erzeugen, wobei die ersten Managementinformationen einen Plan zum Verringern der Menge des Leistungsüberschusses durch Erhöhen der Mengen des Leistungsbedarfs oder Verringern der Mengen der Leistungserzeugung von mit dem Stromverteilernetz verbundenen Kunden, um innerhalb eines die zulässige Leistungskapazität jedes Stromverteilernetzabschnitts nicht überschreitenden Bereichs zu sein, umfassen, und
xiv) die ersten Managementinformationen mindestens auf die zweite Managementvorrichtung (2) jedes von den ersten Managementinformationen benannten Kunden zu übertragen.

## Revendications

1. Système de gestion de puissance (100) pour un réseau de distribution et une pluralité de clients, le système étant un système sur ordinateur comprenant :
un premier appareil de gestion de puissance (1) configuré pour exécuter une gestion de puissance en traitant une variété d'informations sur chaque client de puissance et sur le réseau de distribution de puissance ;
un second appareil de gestion de puissance (2) prévu pour chaque client de puissance et configuré pour exécuter un ajustement à la demande de fourniture de puissance d'un appareil (3) en tant que cible de gestion dans chaque client de puissance ; et
un troisième appareil de gestion de puissance (4) prévu pour le réseau de distribution de puissance,
le premier appareil de gestion de puissance (1), le second appareil de gestion de puissance (2), et le troisième appareil de gestion de puissance (4) étant couplés en termes de communication les uns avec les autres, dans lequel
le second appareil de gestion de puissance (2) inclut
une unité de communication et une unité arithmétique, dans lequel le second appareil de gestion de puissance (2) est adapté
a) à surveiller une demande quantitative de puissance et une génération quantitative de puissance par chaque client,
b) à créer une seconde information de gestion représentant une demande quantitative de puissance et une génération quantitative de puissance par chaque client à un instant futur donné sur la base des valeurs de la demande quantitative de puissance et de la génération quantitative de puissance obtenues par la surveillance,
c) à communiquer avec l'appareil (3) à titre de cible de gestion dans chaque client de puissance et avec le troisième appareil de gestion de puissance (4), et
d) à transmettre la seconde information créée au premier appareil de gestion de puissance (1),
le troisième appareil de gestion de puissance (4) est un appareil de traitement d'information configuré pour surveiller et pour commander un réseau de distribution de puissance et retenir une information de configuration des appareils de distribution de puissance dans le réseau de distribution de puissance, le troisième appareil de gestion de puissance (4) étant configuré pour exécuter un traitement et pour transmettre l'information de configuration au premier appareil de gestion de puissance (1), l'information de configuration incluant
e) des morceaux d'information sur des appareils de distribution de puissance contenus dans le réseau de distribution de puissance,
f) chaque client couplé à l'appareil de distribution de puissance, qui consomme une puissance et qui fournit une puissance générée au réseau, et
g) une quantité de puissance permissible pour chacune des sections du réseau de distribution de puissance définies par les appareils de distribution de puissance, et
le premier appareil de gestion de puissance (1) inclut une unité de communication (13) et une unité arithmétique, dans lequel le premier appareil de gestion de puissance (1) est adapté
h) à recevoir la seconde information de gestion et la troisième information de gestion depuis le second appareil de gestion de puissance (2) via l'unité de communication (13),
i) à recevoir l'information de configuration depuis le troisième appareil de gestion de puissance (4) via l'unité de communication (13),
j) à calculer une somme des demandes quantitatives de puissance et une somme des générations quantitatives de puissance à un instant futur donné dans une zone donnée du réseau de distribution de puissance sur la base de la seconde information de gestion, et
k) à calculer une valeur quelconque parmi un surplus quantitatif de puissance et un déficit quantitatif de puissance dans la zone donnée à l'instant futur donné en utilisant une différence entre la somme des demandes quantitatives de puissance et la somme des générations quantitatives de puissance calculées dans l'étape j),
**caractérisé en ce que**
le second appareil de gestion de puissance (2) est en outre adapté
l) à créer une troisième information de gestion représentant une demande quantitative de puissance et une génération quantitative de puissance ajustable par chaque client depuis la demande quantitative de puissance et la génération quantitative de puissance dans la seconde information de gestion,
m) à transmettre la troisième information créée au premier appareil de gestion de puissance (1) ;
le premier appareil de gestion de puissance (1) est en outre adapté
n) à créer une première information de gestion basée sur l'information de configuration et sur la troisième information de gestion, dans lequel la première information de gestion inclut un plan pour réduire le surplus quantitatif de puissance en augmentant la demande quantitative de puissance ou en réduisant la génération quantitative de puissance des clients connectés au réseau de distribution de puissance pour tomber dans une plage qui n'excède pas la capacité permissible de puissance pour chaque section du réseau de distribution de puissance, et
o) à transmettre la première information de gestion au moins au second appareil de gestion (2) de chaque client désigné par la première information de gestion.

2. Système de gestion de puissance selon la revendication 1, dans lequel le premier appareil de gestion de puissance (1) est en outre configuré
p) pour recevoir une quatrième information de gestion depuis le second appareil de gestion de puissance (2) via l'unité de communication,
la quatrième information de gestion représentant des valeurs passées des demandes quantitatives de puissance et des générations quantitatives de puissance par les clients connectés au second appareil de gestion de puissance (2) ;
q) pour calculer une valeur passée d'une capacité de puissance sur chaque section du réseau de distribution de puissance à partir des valeurs passées des demandes quantitatives de puissance et des générations quantitatives de puissance par chacun des clients représentés par la quatrième information de gestion ;
r) pour calculer une valeur planifiée de la capacité de puissance sur chaque section du réseau de distribution de puissance depuis un plan concernant au moins soit les demandes quantitatives de puissance soit les générations quantitatives de puissance par chacun des clients représentés par la première information de gestion ; et
s) pour comparer la valeur passée calculée et la valeur planifiée, et, si la valeur passée calculée est plus grande, pour détecter une section du réseau de distribution de puissance ayant une possibilité d'un flux de puissance qui excède la capacité de puissance permissible.

3. Système de gestion de puissance selon la revendication 2, dans lequel le premier appareil de gestion de puissance (1) est en outre configuré
t) pour extraire, quand la section du réseau de distribution de puissance ayant la possibilité d'un flux de puissance qui excède la capacité de puissance permissible est détectée, sur la base de la troisième information de gestion, un client qui est capable d'ajuster une valeur quelconque parmi la demande quantitative de puissance et la fourniture quantitatif de puissance, à titre de client dont la valeur passée calculée est susceptible d'être réduite,
u) pour recréer la première information de gestion incluant le plan pour augmenter la demande quantitative de puissance ou réduire la génération quantitative de puissance par le client extrait ; et
v) pour transmettre une première information de gestion recréée au moins au second appareil de gestion (2) de chaque client désigné par la première information de gestion recréée.

4. Procédé de gestion de puissance mis en oeuvre par un système ayant les caractéristiques de l'une quelconque des revendications précédentes, le procédé comprenant les étapes consistant à :
amener le second appareil de gestion de puissance (2)
i) à surveiller une demande quantitative de puissance et une génération quantitative de puissance par chaque client,
ii) à créer une seconde information de gestion représentant une demande quantitative de puissance et une génération quantitative de puissance par chaque client à un instant futur donné sur la base des valeurs de la demande quantitative de puissance et de la génération quantitative de puissance obtenues par surveillance,
iii) à créer une troisième information de gestion représentant une demande quantitative de puissance et une génération quantitative de puissance susceptibles d'être ajustées par chaque client à partir de la demande quantitative de puissance et de la génération quantitative de puissance dans la seconde information de gestion,
iv) à communiquer avec l'appareil (3) en tant que cible de gestion dans chaque consommateur de puissance et avec un troisième appareil de gestion de puissance (4), et
v) à transmettre la seconde et la troisième information créées au premier appareil de gestion de puissance (1),
amener le troisième appareil de gestion de puissance (4) à exécuter un traitement et à transmettre l'information de configuration au premier appareil de gestion de puissance (1), l'information de configuration incluant
vi) des morceaux d'information sur les appareils de distribution de puissance contenus dans le réseau de distribution de puissance,
vii) chaque client couplé à l'appareil de distribution de puissance, qui consomme de la puissance qui alimente une puissance générée au réseau, et
viii) une capacité permissible de puissance pour chacune des sections du réseau de distribution de puissance définies par les appareils de distribution de puissance, et
amener le premier appareil de gestion de puissance (1)
ix) à recevoir la seconde information de gestion et la troisième information de gestion depuis le second appareil de gestion de puissance (2) via l'unité de communication (13),
x) à recevoir l'information de configuration depuis le troisième appareil de gestion de puissance (4) via l'unité de communication (13),
xi) à calculer une somme des demandes quantitatives de puissance et une somme des générations quantitatives de puissance à un instant futur donné dans une zone donnée du réseau de distribution de puissance sur la base de la seconde information de gestion, et
xii) à calculer une valeur quelconque parmi un surplus quantitatif de puissance et un déficit quantitatif de puissance dans la zone donnée à l'instant futur donné en utilisant une différence entre la somme des demandes quantitatives de puissance et la somme des générations quantitatives de puissance calculée dans l'étape xi),
xiii) à créer une première information de gestion basée sur l'information de configuration et sur la troisième information de gestion,
dans lequel la première information de gestion inclut un plan pour réduire le surplus quantitatif de puissance en augmentant la demande quantitative de puissance ou en réduisant les générations quantitatives de puissance des clients connectés au réseau de distribution de puissance pour tomber dans une plage qui n'excède pas la capacité de puissance permissible pour chaque section du réseau de distribution de puissance, et
xiv) à transmettre la première information de gestion au moins au second appareil de gestion (2) de chaque client désigné par la première information de gestion.
